# EUROPEAN PATENT SPECIFICATION

(11) **EP 0 939 230 B1**
(45) Date of publication and mention of the grant of the patent: **25.08.2004**
(21) Application number: 99301493.5
(22) Date of filing: 01.03.1999
(51) Int. Cl.: F04D 27/02, F01D 17/10

(54) **Guiding device for a movable element**
Gleitführung für ein bewegliches Element
Elément de guidage pour un élément mobile

(30) Priority: 27.02.1998 US 76184 P
(43) Date of publication of application: 01.09.1999
(73) Proprietor: UNITED TECHNOLOGIES CORPORATION, Hartford, CT 06101 (US)
(72) Inventor: Honda, Keith T., Ellington, Connecticut 06029 (US); Weiner, Harvey I., South Windsor, Connecticut 06074 (US)
(74) Representative: Leckey, David Herbert

(56) References cited:
- EP-A- 0 421 596
- US-A- 4 827 713
- US-A- 5 054 286
- US-A- 5 380 151
- US-A- 5 749 218

## Description

This invention relates to a liner for a stator assembly for an axial flow rotary machine and more particularly to structure for actuating a device for selectively flowing air from a working medium flowpath of the machine. While the invention was conceived in the field of axial flow, gas turbine engines for bleeding air at a point between two compressor rotor assemblies, it has application to other devices in such engines that employ an actuating ring.

Axial flow gas turbine engines include a compression section, a combustion section and a turbine section. A flowpath for medium gases extends through these sections of the engine. During operation, the gases are pressurized in the compression section and fuel is added in the combustion section. The fuel is burned to add energy to the pressurized gases. The hot, pressurized gases are expanded through the turbine section to provide the work of compression and hot, high pressure gases for subsequent use.

U.S. Patent No. 4,827,713 issued to Paterson et al entitled "Stator Valve Assembly for a Rotary Machine" is an example of such a gas turbine engine. In Paterson, the compression section of the engine is provided with two independent mechanical compressors. During transient operating conditions, one compressor can provide more flow than can be accommodated by the second compressor. Accordingly, the compression section is provided with a plurality of passages extending about the working medium flowpath to allow a portion of the air to escape form the compression section. In particular, the engine has a housing extending circumferentially about the axis of the engine. The housing has a plurality of openings. Each opening is covered or uncovered by an axially translating valve ring having circumferentially extending seal surfaces axially which move to engage resilient seal members. The valve ring is moved from an opened to a closed position by actuating means and includes guide roller assemblies in one ring and guide slots in the other ring.

The engine has circumferentially extending resilient seal members which extend axially. In the closed position, the seal members extend between a valve ring and the seal surface. The valve ring is urged by simple actuating means from an open position to a closed position to axially compress the resilient seal members on either side of the openings to provide a gas tight seal.

The valve ring is movable between an opened and a closed position and being guided by a slot and guide pin combination for urging the valve ring axially against resilient sealing members, the slots being contoured to provide a mechanical advantage as the axial compressive force is applied to the resilient sealing members.

The valve ring is movable between an open position and a closed position. The ring is guided by a slot and pin (cam follower) configuration, the slot having a preselected contour as the ring compresses the resilient seal members such that an inclined plane effect is provided during compression. In one embodiment, a feature is a bushing which engages the cam follower and the adjacent stator structure as the valve ring is moved to the open position.

As will be realized, the loss of working medium gases through the openings under steady state conditions when the compressors are operating at their design point will cause a decrease in the efficiency of the engine. Accordingly, it is desirable to insure that flow does not occur through these openings under conditions which do not require the diversion of flow from the flowpath.

Another problem is wear on the surface of the track opening and fracture failures of the pin which holds the hardface roller assembly in engagement with the track opening. A particular concern of the prior art design shown in Fig. 10 is the potential failure of the roller assembly occasioned by the shank breaking or by the thrust element at the head of the pin coming free and allowing the rotatable element of the roller to fall into the engine and degrade the performance of the engine. For example, the roller assembly has a thrust element which is bonded or mechanically attached to the pin. Experience has shown that this thrust element has the capability to become separated from the pin.

The above art notwithstanding, the Applicant has sought to decrease leakage through such seals by improving the sealing effectiveness of the seals and decreasing the effect that distortion resulting from operative load has on seal components.

From one aspect of the invention, there is provided a liner for a stator structure for a rotary machine having track openings for receiving a roller assembly having a rotatable element which moves between two positions under operative conditions;
said liner being adapted to be disposed circumferentially about the axis of the machine in a track opening and comprising:
a first end,
a second end,
an opening extending from the first end to the second end which is adapted to receive the rotatable element,
a first rail wall extending from the first end between the first end and the second end;
a second rail wall spaced laterally from the first rail wall; said pair of rail walls bounds the opening for guiding the rotatable element of the roller assembly as the rotatable element moves from the first position to the second position;
said first end being spaced laterally from said second end;
a support member extending laterally with respect to the rail walls; and
locating surfaces for locating the liner with respect to the stator structure.

According to the present invention, a liner for the track opening of a guide assembly for a gas turbine engine preferably has a pair of curved arc walls that are parallel and a reinforcing member extending between the walls to form a U-shaped track that positions the walls with respect to each other during manufacturing operations and under operative conditions.

In accordance with one detailed embodiment of the present invention, the reinforcing member is a plate.

In accordance with one detailed embodiment, the plate has a pair of flanges extending from the walls that adapt the plate to engage the stator structure of the engine, the flanges having a first thickness in a direction substantially parallel to the walls and perpendicular to the flange and a base extending between the walls having a thickness which is less than the thickness of the first flange and the second flange.

In accordance with another detailed embodiment, the plate has at least one opening extending through the plate to decrease the continuity of the plate and the spring rate of the plate and to provide a means for draining fluid from the plate under operative conditions in the engine.

In accordance with one detailed embodiment, the interior of each wall has coating to provide an anti-gallant to the walls, such as aluminum bronze, plasma spray or coating or molydisulfide coating.

A primary feature of the present invention is a liner for a positioning the actuating ring of a gas turbine engine. Another feature is the walls of the liner which follow a curved arc. In one detailed embodiment, the arc has a constant radius. In an assembled condition, the contour of the liner is adapted to match the contour of the roller assembly in the closed position. In one detailed embodiment in the assembled condition, elastomeric material is disposed between the liner and the housing to which the liner is attached.

A primary advantage of the present invention in its preferred embodiments at least is durability of the liner and the ring assembly to which the liner is attached which results from using a harder material for the liner than for the track assembly. Another advantage is the reproducibility of the liner which results from positively supporting the walls with a base that forms a U-shaped structure during machining operations. Another advantage of the liner is the spring rate of the liner which results from the thickness of the liner between the walls as compared to attachment structure in its stalled condition. Another advantage is the durability of the liner that results from contouring the liner such that in the maximum load position of the liner is engaged along a line of contact which results from engagement between the roller assembly and the liner as the roller assembly moves from the open to the closed (maximum load) condition.

Some preferred embodiments of the present invention will now be described by way of example only, and with reference to the accompanying drawings in which:
Fig. 1 is a side elevation view of a gas turbine engine with the exterior of the engine broken away to show a portion of the interior of the engine.
Fig. 2 is an enlarged cross-sectional view of a portion of the engine shown in Fig. 1.
Fig. 3 is an enlarged cross-sectional view of a portion of the engine shown in Fig. 2 with portions of the engine broken away for clarity.
Fig. 4a is a front view of a portion of the stator assembly shown in Fig. 2 and Fig. 3.

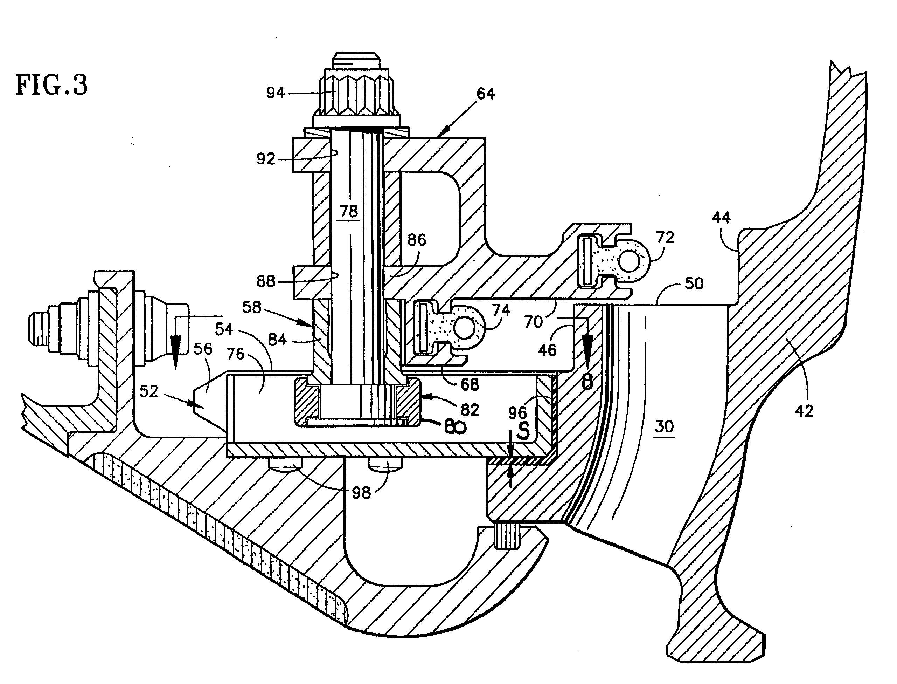

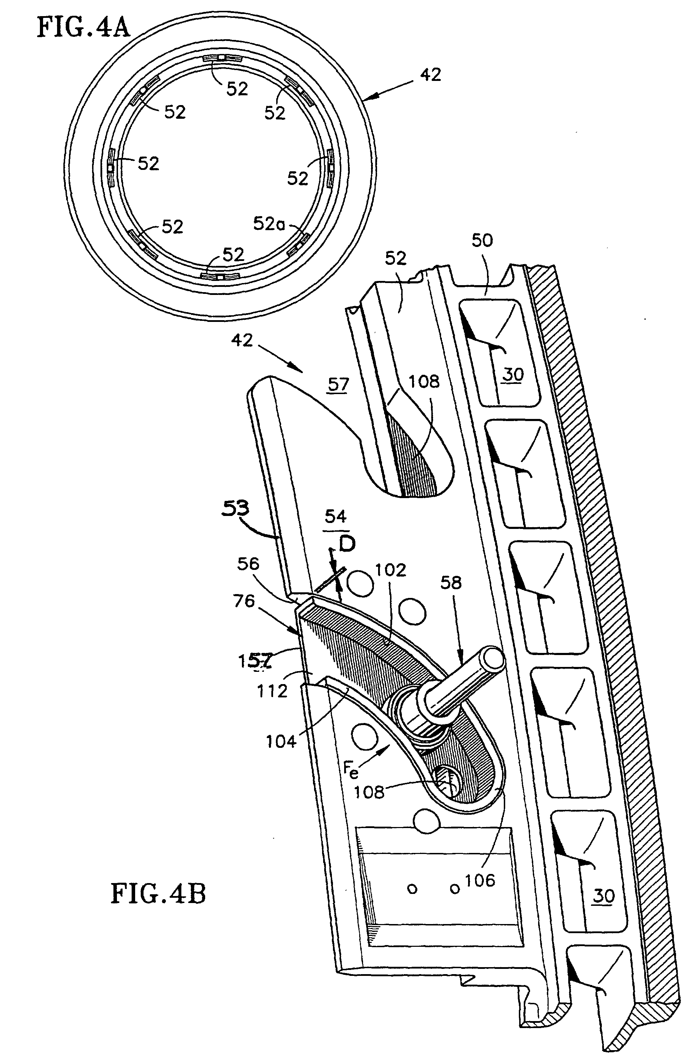

Fig. 4 is a partial perspective view of the housing shown in Fig. 3 showing liner, the roller assembly and two adjacent slots formed in the housing.

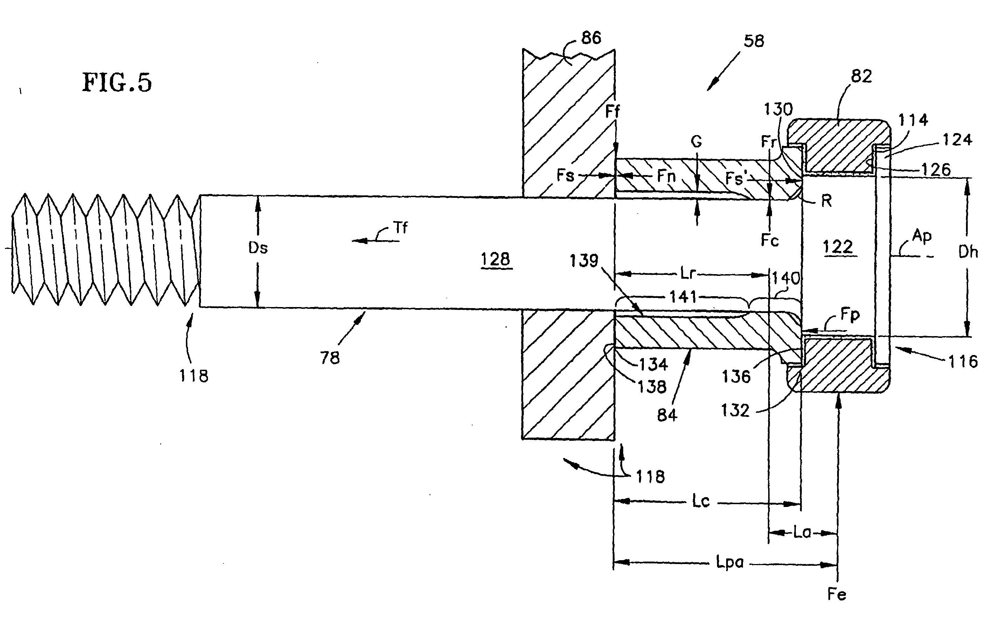

Fig. 5 is an enlarged side elevation view of a portion of the engine shown in Fig. 3 showing in detail the relationship of the elements of the roller assembly.

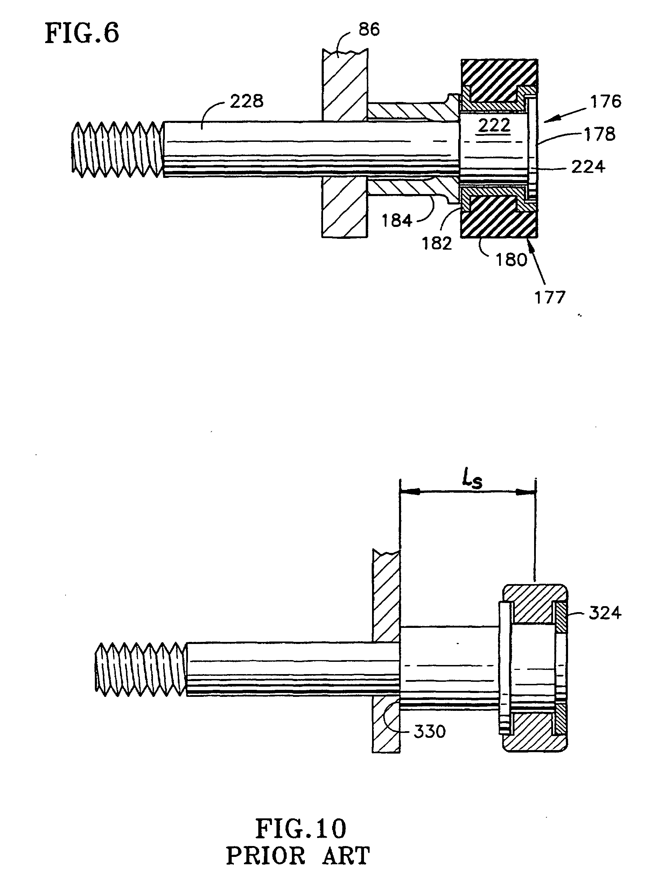

Fig. 6 is an alternate embodiment of the roller assembly shown in Fig. 5.

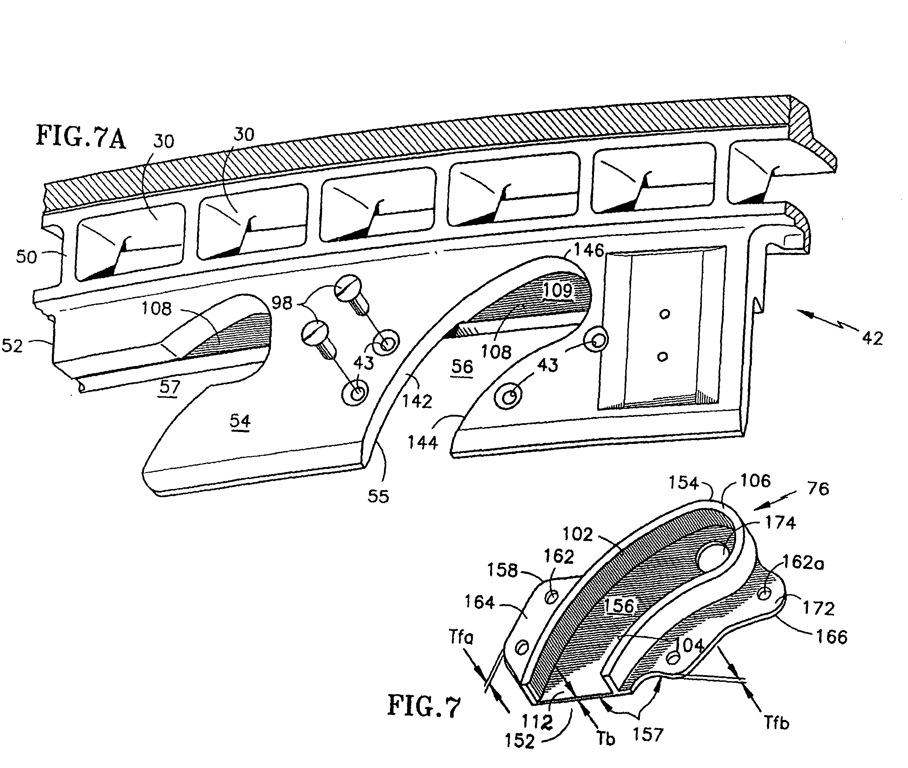

Fig. 7a is a partial perspective view of the structure shown in Fig. 4 in exploded fashion shown in the relationship of the liner and rivets to the housing.

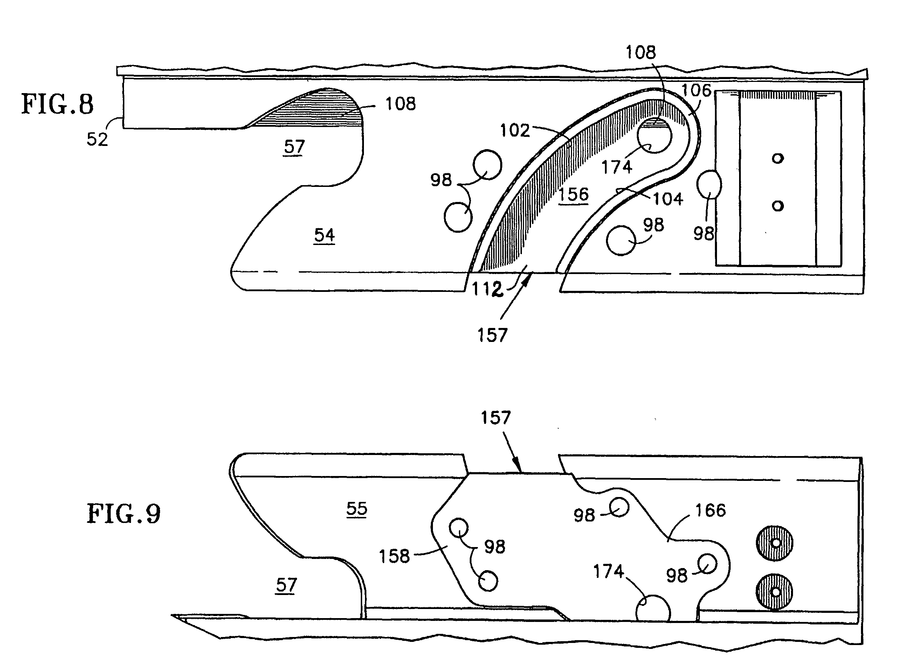

Fig. 8 is a plan view taken along the lines 8a-8a of Fig. 3.
Fig. 9 is a bottom view of the structure shown in Fig. 8.
Fig. 10 is a view of a prior art roller assembly.

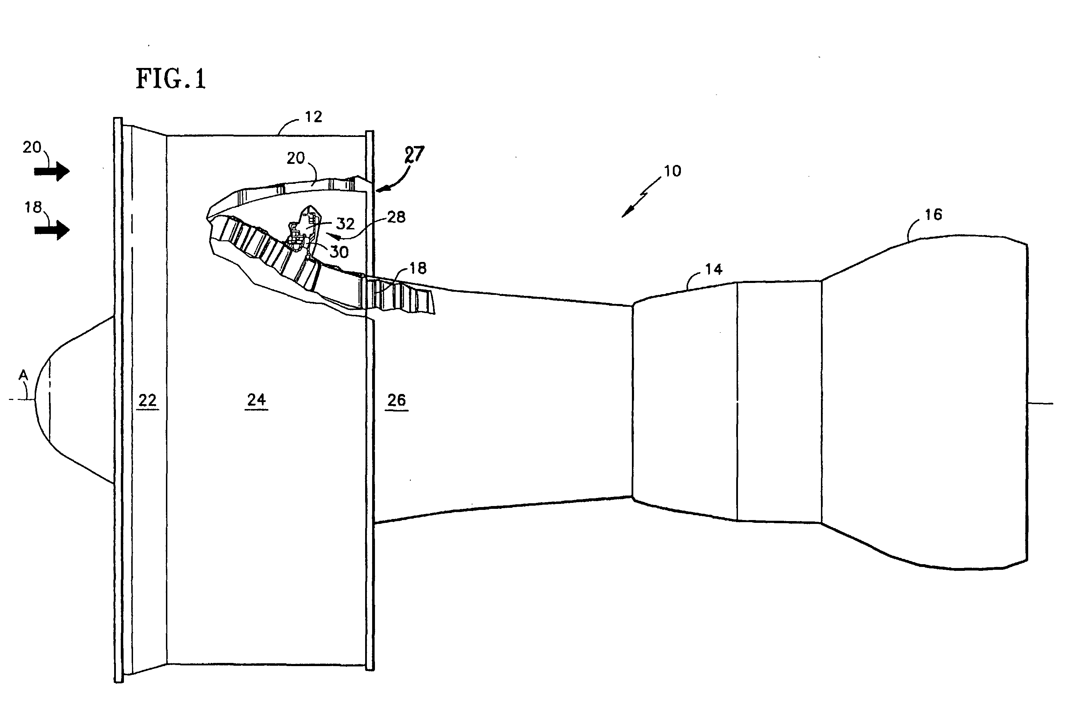

Fig. 1 is a side elevation view of an axial flow, gas turbine engine 10 of the turbofan type having an axis A. The exterior of the engine is broken away to show a portion of the interior of the engine.

The engine 10 has an annular compression section 12, a combustion section 14 and a turbine section 16, which are disposed about the axis A. A primary flowpath 18 for working medium gases extends circumferentially about the axis of the engine and rearwardly through the sections of the engine. A secondary flowpath 20 for working medium gases, commonly called a bypass flowpath, is radially outwardly from the first flowpath and extends rearwardly through the outermost portion of the compression section of the engine.

The compressor section includes a fan 22, a first compressor section 24 and a second compressor 26 spaced rearwardly from the first compressor. The first compressor is commonly called the low pressure compressor and the second compressor is commonly called the high pressure compressor. These compressors are designed to operate at different speeds.

The engine has a stator assembly 27, having a compressor bleed system 28. The compressor bleed system 28 includes a plurality of passages 30, an annular chamber 32 and a second plurality of passages (not shown) which place the primary flowpath 18 for working medium gases in flow communication with the secondary flowpath 20 through the chamber 32.

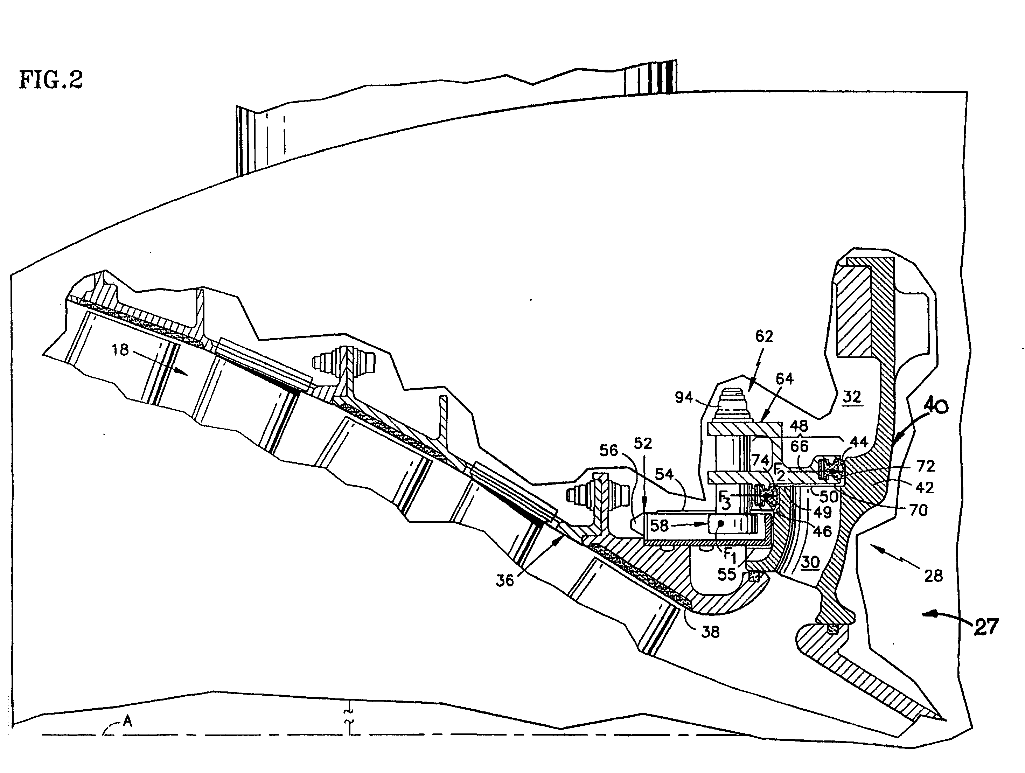

Fig. 2 is an enlarged view of a portion of the engine shown in Fig. 1 showing in further detail the compressor bleed system 28. An inner case 36 has a flowpath wall 38 which outwardly bounds the primary flowpath 18. A housing assembly 40 includes a housing 42. The housing 42 extends circumferentially to bound a portion of the annular chamber 32. Each passage 30 extends from the primary flowpath 18 to the chamber 32 through the inner flowpath wall and through the housing.

The housing 42 is of a one-piece construction. The housing has a pair of seal surfaces 44,46 extending circumferentially about the housing. The seal surfaces are oriented in the axial direction and face upstream. The seal surfaces are spaced axially defining a seal region 48 therebetween. An outwardly facing, cylindrical surface 49 extends axially between the seal surfaces. The seal surfaces are located such that each passage through the one-piece ring has an opening 50 in flow communication with the seal region.

The housing has a plurality of axially extending flanges 52 as shown in Fig. 4a. Each local flange has an edge 53, outwardly facing surface 54, an inwardly facing surface 55 and a plurality of track openings, as represented by the track opening 56, which adapts the housing to receive a plurality of roller assemblies 58.

The compressor bleed system 28 includes a valve 62 having a valve ring 64. The valve ring has a sleeve 66 outwardly of the passageways 30 in the housing. The sleeve is concentrically disposed with respect to the cylindrical surface 49 of the housing. The valve is movable to a first, open position (shown in Fig. 3) and to a second, closed position as shown in Fig. 2. The valve ring has an inwardly facing surface 70 which is adapted, if required under operative conditions, to slidably engage the corresponding outwardly facing cylindrical surface 49 on the housing. The valve ring has two axially facing seal members 72,74 which are oriented in the downstream direction and which are spaced axially by a distance which permits each to engage an associated seal surface 44,46 on the housing. The compressible seal members may be made of any material that is compatible with the environment and which resiliently deforms upon the application of pressure.

Fig. 3 is an enlarged cross-sectional view of a portion of the engine shown in Fig. 2 with portions of the engine broken away for clarity. Fig. 3 shows in detail the roller assembly 58 and a liner 76 for the track opening 56 in the flange. The roller assembly 58 includes a pin 78, a bearing surface 80 disposed on rotatable element or rollers 82. The roller 82 engages the pin and a collar 84 disposed between the pin and one of the supports 86 of the valve ring 70. The pin extends through holes 88,92 in the valve ring which are slightly (thousandths of an inch) larger than the pin. A fastener, such as nut 94, engages the pin to exert a force on the pin causing the pin to clamp the collar against the support.

Fig. 3 also shows the liner 76 for the roller assembly 58. The liner is disposed in the local flange 52 of the housing in the first track opening 56. Elastomeric material 96 is disposed between the walls of the liner assembly and in some applications may extend between the bottom of the liner and the housing. Fasteners, as represented by the rivets 98, extend between the liner 76 and the flange 52 of the housing 42 to attach the liner to the housing.

Fig. 4a shows a front view of a housing 42 having the passages 30 (not shown) for bleed air from the flowpath 18 of the engine. As shown in Fig. 4a, the housing has seven local flanges 52, each having one of the first plurality of openings for the liner. In addition, the housing has a flange 52a which adapts the housing to engage a bellcrank assembly for driving the valve ring between the first and second positions. The bellcrank assembly may be of the type shown in U.S. Patent No. 4,827,713, issued to Patterson.

Fig. 4b is a partial perspective view of the housing 42 shown in Fig. 3 and Fig. 4a showing the liner 76 and the roller assembly 58. Two adjacent track openings are formed in one of the local flanges of the housing. There are two types of track openings 56,57. Each of the first plurality of track openings 56 receives the liner. The liner 76 has a first rail wall 102, a second rail wall 104 and an end wall 106 extending circumferentially and axially between the walls 102,104. As can be seen, the track opening 56 extends over a portion of the housing having a shelf 108. A spaces between the shelf 108 and the liner 76 receives the elastomeric material shown in Fig. 3. The liner has a base 112 having a hole extending radially therethrough as represented by the hole 174 shown in Fig. 7. The second type of track opening 57 is designed to receive a damping roller assembly of the type shown in Fig. 6. The second track opening 57 does not have a liner.

Fig. 5 is an enlarged side elevation view of a portion of the engine shown in Fig. 3 showing in detail the relationship of the elements of the roller assembly 58. The roller assembly 58 is disposed about an axis Ap and has a race 114 which receives the rotatable element, roller 82. The race might simply be the adjacent surfaces which bound the opening that receives the rotatable element. Alternatively, the race might be a thin layer of proprietary Teflon® fiberglass material disposed in a polyamide resin such as a self lubricating proprietary composition available from the Kamatics Corporation as K-Therm T-87 Material. The Kamatics Corporation is a Kaman Company, P. O. Box 3, Bloomfield, CT 06002.

The pin 78 of the roller assembly 58 bounds a portion of the race 114 which receives the rotatable element 82. The pin has a first end 116 and a second end 118. The pin has a head 122 at the first end which extends circumferentially about the axis Ap to define the innermost portion of the race for the rotatable element. A thrust member 124 extends radially outward from the head. The thrust member is formed as one piece with the head. The thrust member has an axial facing surface 126 which bounds one side of the race. A cylindrical shank 128 extends axially from the head and is disposed about the axis Ap. The shank has a diameter Ds which is smaller than the diameter of the head Dh. A fillet radius R extends between the head and the shank. The pin includes a clamping surface 130 which extends radially between the shank and the bottom of the race. The clamping surface 130 faces in an axial direction toward the second end 118 of the pin for exerting a clamping force on the collar 84.

The collar 84 has a first end 132 disposed adjacent the head 122 of the pin 78. A second end 134 adapts the collar to engage the support 86. A first radial surface 136 at the first end extends radially outwardly and engages the clamping surface 130 of the head 122 of the pin. The first radial surface 136 extends beyond the clamping surface to bound the second side of the race.

A second radial surface 138 of the collar 84 is spaced axially from the first radial surface by a distance Lr. The second radial surface 138 extends circumferentially about the collar 84 to form a clamping surface for the collar. The clamping surface adapts the collar to engage the support 86 of the ring.

The collar 84 has an internal axial surface 139 which extends from the first radial surface 136 to the second radial surface 138. The internal axial surface further has a first region 140 adjacent the head which engages the shank 128 with a compressive force. The collar has a second region 141 spaced radially outwardly from the shank 128 to leave a gap G between the collar and the shank which extends to the support 86. The second region is spaced radially outwardly of the first region which extends from the second region to the clamping surface 130.

Fig. 6 is an alternate embodiment 176 of the roller assembly 58 shown in Fig. 5. This embodiment is used as a damper roller assembly 176. Each of these damper roller assemblies 176 is disposed in one of the plurality of second track openings 57 to provide damping as the ring moves from the open to the closed position. In this embodiment, the damper roller assembly has a roller 177 formed from a rubber material 180 molded into a circumferentially extending steel member 182. The rubber is a Viton Rubber material impregnated with Kevlar® fibers and is available from Jonal Laboratories Inc., Meriden, CT. The rubber material is molded onto a steel rim (AMS 5630) which allows greater rim engagement and bond strength.

The race is formed as is the race shown in the embodiment of Fig. 5 with K-Therm T-87 Material from the Kamatics Corporation. The remainder of the assembly 176 is very similar to the hard roller assembly shown in Fig. 5 utilizing a pin 178, a collar 184 and a head 222. It is a one piece construction with a thrust member 224 extending radially outwardly from the pin. As used with respect to the roller assemblies 58, 176 in Fig. 5 and Fig. 6, the term "one piece" means that the thrust element is formed as a unitary structure with the pin and is not joined, mechanically attached or bonded to the pin. In addition, the damper roller assembly has a shank 228 on the pin which extends through the support of the ring which is spaced radially slightly from the support to provide a gap between the support and the shank.

Figs. 7 and 7a are a partial perspective view of the structure shown in Fig. 4 in exploded fashion showing the relationship of the liner 76 and rivets 98 to the local flange 52 of the housing 42. The housing has pairs of holes 43 for receiving the rivets. The rivets have a spring constant in the installed condition which is less than the spring constant of the housing and are able to flex in the installed condition should there be differential thermal growth between the housing and the liner.

The track openings 56,57 extend axially and circumferentially in the flange 52 and adapt the flange to receive the roller assemblies 58,176. The first openings 56 extend through the flange from the outer surface 54 to the inner surface 55 of the flange at least over a portion of the track opening. The opening extends axially and circumferentially over a portion of the remainder of the housing to form the shelf 108 shown in Fig. 4. The shelf 108 has an outer surface 109 which faces in the radially outward direction and which adapts the housing to receive the elastomeric material 96 or may be simply spaced slightly from the liner 76 in the installed condition.

Each of the first openings 56 is bounded a first side 142 and, by a second side 144 spaced circumferentially from the first side and a third side 146 which extends circumferentially between the first side and the second side. In the embodiment shown, the first and second sides may be formed such that they are relatively parallel being formed by radii having a common center. However, these sides are not necessarily made so precisely. This permits for easy machining in the repair or modification of a structure having worn surfaces in the first track openings. A method of modifying the slot is to remove worn material from both surfaces until the opening is large enough to accommodate a liner 76. Thus, the method of modification has the advantage of not requiring precise machining of the first track openings once the holes 43 for the fasteners are precisely located.

The liner 76 has a first end 152, a second end 154 and an opening or track 156 extending from the first end to the second end. The liner includes the first rail wall 102 extending from the first end 152 between the first end 152 and the second end 154. The first rail wall 102 does not necessarily extend to the second end 154 but may terminate at that location in embodiments which do not have an end wall. The first rail wall 102 has a constant radius for a region which extends over one half the distance between the first end and the second end. The second rail wall 104 is spaced laterally from the first rail wall 102 in the generally circumferential direction. The second rail wall 104 extends parallel to the first rail wall 102 from the first end 152 between the first end 152 and the second end 154. The second rail wall 104 has a constant radius for a region which is parallel to the first rail wall 102. The second rail wall 104 may terminate at the second end as may the first rail wall 102. Alternatively, and as shown, an end wall 106 extends laterally from the first rail wall to the second rail wall.

A plate 157 extends laterally with respect to the rail walls 102,104. The plate 157 includes the base 112 having a thickness Tb. The plate 157 extends to the first rail wall 102 and the second rail wall 104. The plate 157 might be continuous for the region between these two walls or may be formed of a series of local reinforcing braces which extend between the walls with one or more holes or openings between the braces as represented by the opening 174. The plate also engages the end wall. The combination of the plate, and the end wall 106 supporting the first rail wall 102 and the second rail wall 104 enables machining of the liner out of a hard material such as steel while maintaining reproducibility between liners. Reproducibility avoids difficulties associated with installing the liner and insuring the new rail walls follow the track of the roller assembly where the liner is used to modify an existing housing formed of relatively soft material, such as aluminum alloy, which has a worn track opening.

A first flange 158 extends laterally from the base 112 adjacent at least one of the walls, such as rail wall 102. The first flange 158 has a radial thickness Tfa and at least one hole 162 which adapts the base 112 to receive a fastener. In the embodiment shown, the flange 158 has two holes 162 to receive rivets 98. The first flange 158 adapts the liner to engage the circumferentially extending stator structure in the engine such as the housing 42. The flange 158 has an outer surface 164 which engages in the inner surface 55 of the housing in a faying relationship, as shown with reference to Fig. 7 and Fig. 8. The second flange 166 extends laterally from the base 112 adjacent one of said walls having a cylindrical portion. The second flange has a thickness Tfb. The thickness Tfa and Tfb are larger than the thickness Tb to provide a larger bearing area to the rivets and to reduce the stiffness of the liner under operative conditions by reason of the decreased thickness Tb of the base 112 in comparison of the thickness Tfa and Tfb. The second flange 166 adapts the liner 76 to engage the housing, has holes 162a, and has an outer surface 172 which is in faying relationship in the installed condition with the inner surface 55 of the local flange 52. In addition, the end of the liner has an opening such as the opening 174, extending through the base which interrupts the continuity of the base 112, decreases its spring rate and provides for the drainage of liquid should the liner accumulate such liquid by reason of its location at the top of the engine.

The rail wall which the roller assembly engages has a contour which is adapted to conform closely to contour of the roller assembly in the installed condition at the second closed position as shown in Fig. 2. For example, the inner wall 104 at the closed position extends substantially parallel to the outer wall or surface of the rotatable element such that there is line contact between the cylindrical wall and the rotatable element. The location of the closed position is normally within the width of the track as measured between the walls and the location at which the walls are parallel as shown in Fig. 8.

As shown in Fig. 9, a portion of the plate 157 of the liner 76 extends over the outer surface of the shelf 108 and the liner flanges 158,166 engage the inner surface 55 of the local flange 52. As a result, the construction could experience the loss of three rivets 98; and as long as one rivet retains the liner in place, the liner would not fall free from the housing by reason of the flanges and the base being trapped in opposite radial directions by the shelf 108 and the inner surface 55 of the housing. In such a case, the single rivet prevents the liner from backing out of its trapped engagement between the outer surface of the shelf and the inner surface of the flange.

During operation of the gas turbine engine shown in Fig. 1, working medium gases are flowed along the primary and secondary flowpaths 18,20. As the gases pass through the first and second compressor 24,26, and as the operating speeds of the individual compressors are adjusted during transient conditions, it may be desirable to divert some of the flow from the primary flowpath 18 to the secondary flowpath 20. The valve ring 64 is moved from the closed position shown in Fig. 2 to the open position shown in Fig. 3. The valve ring is guided positively in a spiral motion by the roller assemblies 58. Each roller assembly moves in an associated track opening 56 in the housing 42. The liner of the opening is formed of a harder material (steel) than the adjacent housing (aluminum alloy AMS 4218 or AMS 4235 material depending on temperature). The liner provides a more durable structure as the hard, inelastic roller of the roller assembly (steel) moves along the line of spiral motion in the slot. The liner might be provided with a wear-resistant coating, such as an aluminum bronze plasma spray coating or a molydisulfide coating, to provide anti- gallant properties to the liner.

At least a portion of the rail walls 102,104 of the liner is cylindrical. The cylindrical shape approximates the ideal spiral or helical surfaces followed by the roller 82, as it moves from each contact point to the next. This simplifies manufacture of the liner 76, by permitting use of a two axis cutting machine to form the rail walls. A more complex four or five axis cutting machine could form rail walls having the ideal shape. However, cylindrical walls facilitate consistently reproducing the contour of the tracks and correctly inspecting the finished product.

As the roller 82 follows the cylindrical track, the roller has point contact at each location that it presses against the wall. As a result, the roller 82 follows a line of contact until the roller reaches the closed position of the housing 42 at which location the cylindrical surface of the roller conforms closely to the cylindrical surface of the liner. This insures in the highly loaded closed position that the roller assembly engages the cylindrical surface of the second rail wall 104 of the liner 76 with a line of vertical contact with less pressure than were it to engage the wall with point contact as it does in the lightly loaded condition as it moves between the open and closed positions. In other embodiments, the roller might have a crown which reduces the line of contact in the closed position. This has the advantage of more precisely locating where the external force Fe acts on the roller and on the track wall.

Differences in the thermal expansion occur between the liner and the housing. The liner 76 is configured to have a spring rate in tension which is sufficiently low in series combination with the spring rate of the fasteners such that it is less than the spring rate of the remaining portion of the valve ring. In this embodiment, the spring rate is significantly less. In addition, the housing 42 has the local flanges 52 having a relatively low spring rate compared to the rest of the housing 42. Each local flange 52 supports a liner 76 from the housing 42 like fingers extending from a palm. This provides the advantage of allowing the housing 42 to accommodate changes in temperature by growing significantly more in the radial direction than does the liner 76. A significant advantage is that it permits use of less dense but higher thermal expansion material, such as the aluminum alloy mentioned earlier, for the relatively massive housing.

The lower spring rate in the liner 76 results in part from reducing the thickness of the plate 157 which extends between the walls 102, 104, 106, removing material from the plate, such as through the drain hole 174 or additional holes or cut outs between the track wall, and providing local flanges 158, 166 to the plate to attach the plate to the housing 42. Thus, even though the coefficient of thermal expansion of the housing is approximately twice the coefficient of thermal expansion of the liner 76 and even though the hard material of the liner has a higher modulus of elasticity E, the liner 76 for the track grows and contacts with the housing, accommodating changes in diameter of the housing as the housing experiences different temperatures under engine operative conditions. This avoids over-stressing the housing, the liner and the fasteners for the liner.

Vibrations in the ring 64, vibrations in the liner 76 and vibrations in the roller assembly 58 all provide the potential for increased wear of, and stresses in, the roller assembly and the liner. The vibrations also produce stresses in these components. Anti-gallant material on the interior of the liner 76 and damping media for vibrations act to reduce these stresses and the wear that results from the vibrations. One satisfactory elastomeric material is silicone rubber and is available from the General Electric Company, Waterford, New York 12188, as RTV 159 Silicone Rubber. Any rubber sealant or elastomeric potting material would provide damping. The elastomeric material damps vibrations which are transmitted from the ring 64 to the liner 76 and damps vibrations in the liner 76 which result from engine operation and from the roller assembly vibrating as the roller assembly follows the track. These result from the roller assembly moving radially in and out or in any direction, although the elastomeric material 96 in this embodiment is more effective for damping vibrations in the circumferential and axial directions. In addition, the elastomeric material 96damps vibrations that occur as the roller assembly tracks the liner with impact loads as the vibrating roller assembly 58 moves from the open to the closed position.

Damper roller assemblies 176 are also provided at each local flange 52 as in the past. The newly designed damper assemblies 176, similar to the cam follower roller assemblies, have an elastomeric roller 177. The damper roller assemblies 176 are disposed about the circumference of the housing adjacent between the hard roller assemblies 58 at each local flange 52. These roller assemblies dampen vibrations in the valve ring 64 that are transmitted to the roller assembly 58 and vibrations in the housing 42 that are transmitted to the liner assembly even though the elastomeric material 96 disposed between the liner and the housing acts to dampen those vibrations. Thus as the roller assembly moves to the open position, the resilient damping roller assemblies 176 are compressed providing a means to damp vibrations and block the roller assembly from wearing the liner

. As the valve ring moves between the open and closed positions, the radially facing surfaces 68,70 on the valve ring and on the housing 50,54 act to center the valve ring about the housing. Further centering is provided by the roller assembly 58 which provides a spline type connection, as where a plurality of roller assemblies 58 are spaced around the circumference of the valve ring 64 and the housing 42, and, the roller assembly is attached to the ring 64 and engages the housing 42.

As shown in Fig. 2 by the reaction forces F1, F2 and F3, the seal compression loads in the closed position are all reacted in the housing area of the static structure. This includes F1 which is the roller assembly load on the support structure (and Fe, which is the reactant load on the roller assembly and is shown in Figure 5) in reaction to the seal loads, and F2 and F3 which are seal loads on the support structure. This has the advantage of reducing any turning moments which result from the coupling of the forces and reduces relaxation of the seal compression during operative conditions as compared to structures in which such loads are more widely separated through use of a several piece construction for reacting the loads.

The following discussion of the reaction of the roller assembly to the external force Fe assumes statically determinate structures and rigid members to illustrate the conceptual operation of the design and the advantages of the design. Under some operating conditions, the structure may become indeterminate and flex but the advantages will remain and are based on the following understanding of its operation.

Torquing the nut which engages the pin 78 of the roller assembly causes a tensile force Tf in the pin. The pin exerts a clamping force on the collar through the clamping face or surface 130 of the pin 78. The clamping force provides a preload and places the collar 84 in compression. The clamping force presses the clamping surface 138 of the collar 84 against the support 86 around the entire circumference of the collar with a predetermined force Fn. The present construction has advantages whether the predetermined force is at the correct level or at less than the correct level which may change the interaction between the collar and the support.

The roller transmits the external reaction force Fe to the head of the pin. The collar resists the external force Fe on the pin with the frictional force Ff developed between the clamping surface of the collar and the support. This frictional force Ff equals the coefficient of friction at the clamping surface 138 multiplied by the normal force Fn at the surface of the collar 134 against the support. The resisting force is represented by the resultant force Fr (opposing the external force Fe) which acts at the first region 140 of the internal axial surface of the collar 84 which is pressed on the shank of the pin. The fit is .0002-.0012 inches (5-30 microns) tight on a diameter, but is not important to achieve the primary advantages of the invention. The fit could be loose if adequate preload/clamping could be maintained to provide a friction force between the collar 84 and pin 78 that is larger than the force Fe. For example, the collar might be loose having a conical interface with the pin 78 to resist the force without friction. This would result in the same bending stresses in the pin. In other alternate constructions, the first region 140 of the internal surface might be spaced slightly from the shank of the pin but inwardly of the second region 141. In such a construction, the benefit of the present invention is realized as the pin deflects slightly to engage the internal surface 139 at the first region 140 such as might occur where the clamping force is lost or was never applied because of insufficient tightening of the nut.

The force Fr acts in close proximity to the force Fe by engaging the pin at the first region 140. This is significant because the resisting force Fr balances the external force Fe but creates a force couple Fe-Fr. The force couple Fe-Fr has a moment arm La and exerts a bending moment on the pin and bending stresses in the pin. The moment Fe-Fr and the stresses are proportional to the length of the moment arm La, which is shortened by having Fr act in close proximity to Fe. The frictional force Ff with the force in the pin Fc creates a moment acting on the collar equal to the moment of the external force couple Fe-Fr. The moment of Ff-Fc is resisted by the force couple Fs-Fp acting on the collar from the support and the pin. Thus, the moment of Fs-Fp equals the moment of Fe-Fr and the couple Fs-Fp causes internal bending stresses in the pin that are proportional to the couple Fe-Fr.

A particular advantage of the present invention is the magnitude of the moment Fe-Fr and the resulting bending stresses in the pin. The moment of Fe-Fr is smaller than prior art constructions because the moment arm La is smaller than those constructions in which the collar has a press fit along the entire length of the shank (which moves the resultant force Fr away from the head of the pin and increases the moment) or prior art constructions having a shoulder on the pin which exerts a clamping force directly on the support, such as are shown in Fig. 10. In this last example, the moment arm Ls for the force Fr has a length which is much greater than La and greatly increases the moment the couple Fe-Fr which ultimately acts at the surface of the support and causes bending stresses in the pin.

The couple Fe-Fr is maintained by maintaining the gap G between the second region 141 and the shank 128 of the pin 78 at a value that prevents contact between the collar and the shank with bending deflections. The load path changes if contact occurs. Making the gap G larger than the minimum necessary to prevent contact at the second region decreases clamping area at the support for the same outside diameter of the collar at the support. The frictional force required to keep the assembly from sliding is at least equal and opposite to the force Fe. It is a function of clamping force (preload) and is independent of area. However, maintaining clamping area at the support results in less wear for supports formed of softer than steel, but lighter weight aluminum structures.

The roller assembly 58 of the present invention also has advantages in constructions where the external force Fe exceeds the frictional force Ff. This may occur because of an anomaly in operating conditions or because the preload Fn is too small because of undertorquing.

In such cases, the external force Fe will cause bending of the shank 128 and the collar 84 may slide or tilt slightly. Again, the moment arm Lr is increased by spacing the collar 84 away from the shank 128 which decreases the amount of normal force Fs of the couple Fs-Fp and the frictional force required to balance the moment required to resist the moment caused by the external force. Several advantages result from this construction. Reducing Fs reduces the pressure on the surface and reduces galling at the surface of the support which results from micro adjustments of the collar 84 in response to the external bending moment.

A significant advantage for durability of the pin 78 is the absence of a stress riser (change in diameter of the pin) at the location of the maximum bending moment in the shank 128. The maximum bending moment in the shank 128 takes place where the internal bending moment in the shank 128 combined with Ff-Fc resists the external bending moment. This takes place at the location of the support 86, spaced by the distance Lc from the clamping face 130 of the pin 78. This avoids having the clamping face 130 of the pin 78 at the support 86 and its associated stress riser connected with the increase in diameter to form the clamping face.

Two other advantages result from spacing the clamping surface 130 of the pin from the support with the collar 84: the first is removing the decreased surface area at the clamping face of the pin from bearing on the soft surface of the support 86 which results from the fillet radius R introduced between the shank and the clamping face on the pin to decrease the stress concentration by avoiding a sharp change in cross section of the pin. The reduced surface area increases the potential of yielding or wearing of the support, which could cause a loss of clamping. In the present construction, the clamping face 130 of the pin 78 with the fillet radius R engages the collar 84. Although the pin 78 has reduced area which increases the pressure exerted by the normal force (which galls or yields the soft surface of the aluminum alloy support in the prior art) it does not have that effect on the hard surface of the steel collar 84. In addition, this reduced area is not reduced significantly, because the fillet radius R can be small due to a higher stress concentration allowed by the reduced bending moment at this location). The area is not important for galling on the collar 84 and the collar 84 is still capable of maintaining the clamping requirement.

As will be realized, the roller assembly 58 might be rigidly mounted to the housing 42 and the liner 76 mounted on the valve ring 64. These are equivalent structures to the structures disclosed and claimed herein. Finally, one or both of the compressible seal members might be mounted on the housing rather than being retained by the valve ring 64 as shown in Fig. 2.

Although this invention has been shown and described with respect to the detailed embodiments thereof, it will be understood by those skilled in the art that various changes in the form and detail thereof may be made without departing from the scope of the claimed invention.

## Claims

1. A liner (76) for a stator assembly (27) for a rotary machine having track openings (56) for receiving a roller assembly (58) having a rotatable element (82) which moves between two positions under operative conditions;
said liner (76) being disposable circumferentially about the axis of the machine in a track opening (56) and comprising:
a first end (152),
a second end (154),
an opening (156) extending from the first end to the second end which is adapted to receive the rotatable element,
a first rail wall (102) extending from the first end between the first end and the second end;
a second rail wall (104) spaced laterally from the first rail wall; said pair of rail walls bounds the opening (156) for guiding the rotatable element of the roller assembly as the rotatable element moves from the first position to the second position;
said first end (152) being spaced laterally from said second end (154);
a support member (106, (157) extending laterally with respect to the rail walls; and
locating surfaces for locating the liner (76) with respect to the statort assembly (27).

2. A liner as claimed in claim 1 wherein the locating surfaces of the liner are holes (162), (162a) which adapt the liner to receive fasteners.

3. A liner as claimed in claim 1 or 2 wherein the second rail wall 104 has a contour which is cylindrical having a constant radius in a region which extends over one half the distance between the first end (152) and the second end (154) and which is preferably adapted to engage the rotatable element (82) at more than one point in the second position.

4. A liner as claimed in claim 3 wherein the first rail wall (102) extends parallel to the second rail wall (104) at least in the region of the second rail wall that has a constant radius.

5. A liner as claimed in any preceding claim wherein the support member comprises an end wall (106) extending laterally from the first rail wall (102) to the second rail wall (104).

6. A liner as claimed in claim 5 wherein the support member further comprises a base (112) which is connected to the first rail wall (102), the second rail wall (104) and the end wall (106).

7. A liner as claimed in claim 6 wherein the base (112) has an opening (174) disposed between the walls (102, 104, 106).

8. A liner as claimed in claim 7 wherein the base (112) includes a plate (157), the plate (157) further having a first flange (158) extending laterally at a location adjacent at least one wall (104), the first flange (158) having at least one hole (162a) which adapts the plate to receive a fastener, the first flange (158) adapting the liner to engage and locate the liner with respect to the circumferentially extending stator structure in the rotary machine; wherein the plate includes a second flange (166) extending laterally from the base at a location adjacent one of said walls (102), the second flange 166, having at least one hole (162) which adapts the base to receive a fastener, the second flange (166) adapting the liner to engage and locate the liner with respect to the circumferentially extending stator structure in the rotary machine.

9. A liner as claimed in claim 8 wherein at least one of said walls (102, 104) has a contour which is adapted to conform closely to the contour of the roller assembly in the installed condition at the second position, said contour being within a distance from the end wall (106) which is less than the lateral distance between the first and second rail walls (102, 104) measured in a direction perpendicular to the walls over the cylindrical portion; and, wherein the thickness of each of the flanges (158, 166) is greater than the thickness of the base.

10. A liner as claimed in claim 1 wherein said first said wall (102) has a constant radius for a region which extends over one half the distance between the first end and the second end;
said second rail wall (104) extends parallel to the first rail wall and has a constant radius for a region which is parallel to the first rail wall; and comprising,
an end wall (106) extending laterally from the first rail wall (102) to the second rail wall (104),
a plate (157) extending laterally with respect to the rail walls, the plate having
a base (112) having a thickness Tb, which is connected to the first rail wall (102), the second rail wall (104) and the end wall (106),
a first flange (158) extending laterally from the base (112) adjacent at least one wall, the first flange (158) having a radial thickness Tfa and at least one hole which adapts the plate (157) to receive a fastener, the first flange (158) adapting the liner to engage the circumferentially extending stator structure in the rotary machine,
a second flange (166) extending laterally from the base (112) adjacent on of said walls having a cylindrical portion, the second flange (166) having a thickness Tfb, a second flange (166) having at least one hole which adapts the plate (157) to receive the fastener, the second flange (166) adapting the liner to engage the circumferentially stator structure in the rotary machine,
and,
an end with at least one opening (174) extending through the base (112) which interrupts the continuity of the base;
wherein at least one of said walls has a contour which is adapted to conform closely to the contour of the roller assembly in the installed condition, said contour being within a distance from the end wall which is less than the lateral distance between the first and second rail walls measured in a direction perpendicular to the walls over their cylindrical portion;
wherein the base and the end wall connecting the rail walls position and support the rail walls with respect to each other during manufacturing assembly and under operative conditions; and,
wherein the thickness of each of the flanges Tfa, Tfb is greater than the thickness Tb of the base to decrease the rigidity of the liner as compared to liners having a thickness of the base which is equal to the thickness of the flanges.

11. A liner as claimed in claim 1 wherein said side walls are curved arc walls (102, 104) that are parallel, and further comprising a reinforcing member (106, 112) extending between the walls to form a U-shaped track.

12. A stator structure for a gas turbine engine comprising a liner (76) as claimed in any preceding claim mounted in track openings (56) thereof.

13. A housing assembly (40) for a gas turbine engine which extends circumferentially about an axis of symmetry, the housing assembly having a housing (42) with a plurality of passages (30) for working medium gases extending in a generally radial direction through the housing (42) which are circumferentially spaced one from the other and which place one side of the housing (42) in fluid communication with the other side of the housing, the housing (42) being adapted to cooperate with an adjacent valve ring assembly (64), which comprises:
a plurality of flanges (52) extending in a generally axial direction from the housing and circumferentially with respect to the axis of the housing (42), each flange being spaced circumferentially from the other and having an edge (53) extending circumferentially, each flange having a track opening (56) extending axially and circumferentially in each flange from the edge (53) which adapts the flange to receive a liner (76) for the track opening and to receive a roller assembly (58) having a bearing surface (80),
each opening being bounded by a first side (142) and by a second side (144) spaced circumferentially from the first side and by a third side (146) which extends circumferentially between the first side and the second side;
a liner (76) as claimed in any of claims 1 to disposed in the first track opening and attached to the flange;
wherein the liner is formed of a material having a hardness greater than the hardness of the housing (42), and wherein the liner (76) has a rate of thermal expansion which is smaller than the rate of the rate of thermal expansion of the housing (42);
wherein the spring rate characteristic of the housing (42) is greater than the spring rate characteristic of the liner (76) such that even though the combination of the housing (42) and the liners (76) form an integral structure, the local flanges (52) move with the housing to the location of the housing and permit thermal expansion of the housing (42) with respect to the liner (76), and the liner deflects slightly with respect to the thermal growth of the flanges to accommodate such growth; and
wherein the flanges (52) are interrupted circumferentially by the track opening (56) extending axially from the first edge (53) of the flange to interrupt the circumferential continuity of the local flanges.

14. The housing assembly (40) as claimed in claim 13 wherein a plurality of fasteners (98) extend between the housing (42) and the liner (76) to attach the liner to the housing.

15. The housing assembly (40) as claimed in claim 14 wherein the fasteners (98) are rivets and have a spring rate which is less than the spring rate of the housing to additionally accommodate thermal growth between the liner and the housing.

16. The housing assembly (40) as claimed any of claims 13 to 15 wherein an elastomeric material (96) is disposed between the liner (76) and the housing (40) to dampen vibrations in the liner.

17. The housing assembly (40) as claimed in claim 16 wherein each flange (52) has an outer surface (54) and an inner surface (55) and the track opening (56) extends radially through the flange from the outer surface to the inner surface of the flange at least over a portion of the track opening, and the flange extends axially and circumferentially over a portion of the remainder of the housing such that the housing has a shelf (108) at each opening having an outer surface (109) which faces in the radially outward direction in close proximity to the inner surface of the liner and wherein the elastomeric material (96) is disposed between the liner (76) and the shelf (108).

18. The housing assembly (40) as claimed in claim 17 wherein the liner member comprises a plate (157) having a base (112) which extends between the rail walls (102, 104), and the plate (157) has an inner surface which extends over the outer surface of the shelf (109).

19. The housing assembly (40) as claimed in any of claims 13 to 18 wherein a hole (174) extends radially through the plate (157) which increases the flexibility of the liner and provides a conduit for trapped liquid.

20. The housing assembly (40) as claimed in any of claims 13 to 19 wherein the liner has a first flange (158) extending laterally from the one of the walls (102, 104), the first flange having an outer surface (164) which engages the inner surface (55) of the flange (52) on the housing, and a second flange (166) extending laterally from the other of said walls (102, 104), the second flange having an outer surface (172) which engages the inner surface (55) of the flange (52) of the housing.

21. The housing assembly (40) as claimed in any of claims 13 to 20 wherein each track opening (56) is bounded by a first side (142), by a second side (144) spaced circumferentially from the first side and by a third side (146) which extends circumferentially between the first side (142) and the second side (144); and
wherein at least one of the walls (102, 104) of the liner is spaced from at least one side of the opening, leaving a gap (D) therebetween and
wherein an elastomeric material (96) is disposed between the side of the track opening and the rail wall of the liner in the gap (D).

22. The housing assembly (40) as claimed in any of claims 13 to 21 wherein the liner (76) is formed of steel and the housing (42) is formed of an aluminum alloy, the liner having a hardness greater than the hardness of the housing, and a rate of thermal expansion which is smaller than the rate of the rate of thermal expansion of the housing.

23. The housing assembly (40) as claimed in any of claims 13 to 22 wherein each flange (52) has an outer surface (54) and an inner surface (55) and each flange (52) has a first track opening (56) and a second track opening (57), the openings extending radially through the flange from the outer surface (54) to the inner surface (55) of the flange at least over a portion of the track opening, and extending axially and circumferentially over a portion of the remainder of the housing such that the housing has a shelf (108) at each opening having an outer surface which faces in the radially outward direction in close proximity to the inner surface (55) and wherein the liner disposed in said first track opening is trapped radially by the shelf (108) and the flange (52).

24. A housing assembly (40) which extends circumferentially about an axis of symmetry, the housing assembly (40) having a housing (42) having a plurality of passages (30) for working medium gases extending in a generally radial direction through the housing (42) which are circumferentially spaced one from the other and which place one side of the housing in fluid communication with the other side of the housing, the housing (42) being adapted to cooperate with an adjacent valve ring assembly (64) having roller assemblies (158,176), which comprises:
a plurality of flanges (52) extending axially from the housing and circumferentially with respect to the axis of the housing, each flange being spaced circumferentially from the other, each flange having an outer surface (54) and an inner surface (55) and each flange having a first track opening (56) and a second track opening (57) extending axially and circumferentially in each flange, each of which adapt the flange to receive a roller assembly (58), the first track opening adapting the flange to receive a roller assembly having a bearing surface (80) and a liner (76) for the track;
each of said first track openings extending radially through the flange from the outer surface to the inner surface of the flange at least over a portion of the track opening, and extending axially and circumferentially over a portion of the remainder of the housing such that the housing has a shelf (108) at each opening having an outer surface (109) which faces in the radially outward direction, each opening being bounded by a first side (142), by a second side (144) spaced circumferentially from the first side (142) and by a third side(146) which extends circumferentially between the first side (142) and the second side (144);
a liner (76) as claimed in claim 1 disposed in the first track opening said liner having said first rail wall (102), said second rail wall (104) and an end wall (106), and at least one of the walls being spaced from at least one side of the opening, leaving a gap (D) therebetween, the liner having
a plate (157) having a base (112) extending between the rail walls (102, 104), the plate having an inner surface which extends over the outer surface (109) of the shelf, the plate including,
a first flange (158) extending circumferentially from the base beyond the walls having an outer surface (164) which engages the inner surface of the housing,
a second flange (166) extending laterally from one of the other of said walls having an outer surface (172) which engages the inner surface of the flange of the housing,
a drain hole (174) extending radially through the plate which is partially blocked by the shelf (108) of the housing; and,
an elastomeric material (96) disposed between the side of the track opening and a wall of the liner in the gap (D);
wherein the elastomeric material (96) disposed between the liner (76) and the housing (42) damps vibrations in the liner;
wherein the liner (76) is formed of a material having a hardness greater than the hardness of the housing (42), and wherein the liner has a rate of thermal expansion which is smaller than the rate of the rate of thermal expansion of the housing;
wherein the spring rate of the housing (42) is greater than the spring rate of the liner (76) such that even though the combination of the housing and the liners form an integral structure, the local flanges (52) move with the housing to each location of the housing, permitting thermal expansion of the housing with respect to the liner and wherein the liner deflects slightly with respect to the thermal growth of the flanges to accommodate such growth;
wherein the flanges (52) are interrupted circumferentially by the track openings extending axially from the first edge of the flange which interrupt the circumferential continuity of the local flanges; and
wherein a plurality of rivets (98) attach the liner to the flange and wherein the rivets have a spring rate characteristic which is less than the spring rate of the housing to additionally to accommodate thermal growth between the liner and the housing and the flange.

25. A housing assembly (40) for a gas turbine engine (10), comprising a housing (42) having a plurality of flanges (52), each having a liner (76) as claimed in any of claims 1 to 11 for receiving a roller assembly (58), said liner being formed of a material having a hardness greater than that of the housing;
said liner having a rate of thermal expansion which is smaller than that of the housing; and
the spring rate characteristic of the housing is greater than of the liner.

26. A stator assembly (27) comprising a housing assembly (40) as claimed in any of claims 13 to 25 and a roller assembly (58) received in the track liner (76) of the housing assembly (40).

27. A stator assembly as claimed in claim 26 wherein said roller assembly (58) comprises:
a pin (78) disposed about the axis Ap having a first end (116) and a second end (118), the pin being urged toward the structure to which the roller assembly is fixed under operative conditions, the pin (78) including,
a head (122) at the first end (116) which engages the rotatable element (82), the head (122) having a diameter Dh which extends circumferentially about the axis (Ap),
a shank (128) extending axially from the head (122) which is disposed about the axis (Ap) and which has a maximum diameter (Ds) which is smaller than the diameter of the head (122),
a clamping surface (130) having a portion which extends radially at a location having a diameter greater than the diameter (Ds) of the shank (128);
a collar (84) having a first end (132) disposed adjacent the head of the pin and a second end (134) which adapts the collar (84) to engage a support (86), the collar (84) further including
a radial surface (136) extending in faying contact with the clamping surface (130),
an internal axial surface (139), the internal axial surface further including,
a first region (140) adjacent the head (122) having a portion which engages the shank (128) with a compressive force,
a second region (141) having a length (Lr), the second region (141) being spaced radially outwardly from the shank (128) and radially outwardly of a portion of the first region (140), the second region (141) extending, in use, from the first region (140) to the clamping surface (86) to leave a gap (G) between the collar (84) and the shank (128) which extends from the first region (141) to the support (86);
wherein in use, the collar (84) exerts a reactive force Fr on the pin (78) at the first region (140), the spacing of the collar from the shank in the second region (141) causing the force Fr to be spaced from the support (86) by at least a distance Lr that is greater than the distance La between the external force Fe and the reactive force Fr such that the maximum bending stresses in the shank have a decreased level in comparison of constructions in which the reactive force Fr against the pin acts at the support (86).

28. A stator assembly (27) for a rotary machine disposed circumferentially about an axis of the machine, the stator assembly (27) including a housing assembly (40) and an actuating ring (64) which is movable axially and circumferentially from a first position to a second position as the ring translates axially in the machine with respect to the housing assembly, the stator assembly including a guide assembly for positioning and guiding the ring as it moves between the first and second locations, which comprises:
a circumferentially extending housing (42) having a plurality of first track openings (56) and second track openings (57) extending circumferentially and axially in the machine, the first openings (56) being spaced circumferentially one from the other, and which are adapted to receive a liner (76), the housing having a plurality of circumferentially spaced local flanges (52), each flange having a first track opening (56) which interrupts the circumferential continuity of the flange which adapts the flange to receive a first roller assembly (58) having a surface (80) and each of which has a second track opening (57) which adapts the flange to receive a second roller assembly(176) which has a surface which is more elastic than the surface of the first roller assembly (58);
a liner (76) as claimed in claim 1 attached to each flange (52) which is disposed in each of the plurality of first track openings (56), the liner having a pair of circumferentially spaced rail walls (102, 104), each rail wall having a portion which extends over at least half the length of the wall and which is cylindrical in shape, the second wall (104) being spaced circumferentially from the first wall (102) and having a portion which is parallel to the first wall (104);
an end wall (106) extending between the first wall (102) and the second wall (104) to bound the liner;
an elastomeric material (96) disposed between the walls and the liner;
a roller assembly (58) having a rotatable element (82) disposed in the track opening (56) which engages a rail wall of the track opening as the roller assembly (58) moves axially with respect to the track opening, the roller assembly (58) having a race (114) for receiving the rotatable element (82), the roller assembly having a pin (78) having a head (122) which bounds a portion of the race (114) for the rotatable element (82) of the roller assembly,
a clamping surface (130) spaced radially from a support (86), the support (86) extending from the ring (64), and
a collar (84) extending between the clamping surface (130) and the support (86) which is urged by the pin (78) into a clamping engagement with the support (86) , the collar having a cylindrical interior disposed about the pin (78);
wherein the cylindrical interior of the collar (84)is spaced radially outwardly from the pin (78) over a region (141) extends from the support and parallel to the pin, wherein said region is a second region and the collar has a first region (140), and wherein the cylindrical interior of the collar is disposed radially inwardly of the second region (141) over the first (140) which extends from the first region through a location between the second region (141) and the clamping surface of the pin (130);
wherein the collar (84) is spaced over the second region (141) which extends from the support and outwardly of the first region (140) to reduce bending stresses in the pin (78);
wherein the first rotatable element (82) has contact at a single point as the rotatable element moves from the first position to the second position and has a cylindrical wall which is parallel to the cylindrical wall of the liner in the closed position such that the rotatable element engages the wall along a line of contact; and
wherein the elastic material (180) of the second rotatable element (177) damps vibrations in the liner (76) and the roller assembly (58) as the liner and roller assembly vibrate with respect to each other at point contact under operative conditions of the engine to reduce vibration induced bending stresses in the pin of the roller assembly and wear on the liner.

29. A method for repairing worn track surfaces (142, 144) in track openings (56) of a gas turbine stator housing (42), comprising
removing worn material from the surfaces (142, 144) of the track opening (56), and
inserting a track liner (76) as claimed in any of claims 1 to 11 into the repaired track opening (56) of the gas turbine housing (42).

30. A method of modifying a roller track opening profile in a gas turbine engine stator structure, comprising
inserting a liner (76) as claimed in any of claims 1 to 11 having the desired track profile into the track opening (56).

## Patentansprüche

1. Auskleidung (76) für eine Statoranordnung (27) für eine Rotationsmaschine mit Bahnöffnungen (56) zum Aufnehmen einer Rollenanordnung (58) mit einem rotationsfähigen Element (82), welches sich zwischen zwei Positionen bei Betriebsbedingungen bewegt;
wobei die Auskleidung (76) umfangsmäßig um die Achse der Maschine in einer Bahnöffnung (56) angeordnet werden kann und aufweist:
ein erstes Ende (152),
ein zweites Ende (154),
eine Öffnung (156), welche sich von dem ersten Ende zu dem zweiten Ende erstreckt, die daran angepasst ist, das rotationsfähige Element aufzunehmen,
eine erste Schienenwand (102), welche sich von dem ersten Ende zwischen dem ersten Ende und dem zweiten Ende erstreckt;
eine zweite Schienenwand (104), welche seitlich von der ersten Schienenwand beabstandet ist, wobei das Paar von Schienenwänden die Öffnung (156) zum Führen des rotationsfähigen Elements der Rollenanordnung begrenzt, wenn das rotationsfähige Element sich von der ersten Position in die zweite Position bewegt;
wobei das erste Ende (152) seitlich von dem zweiten Ende (154) beabstandet ist;
ein Abstützelement (106, 157), welches sich seitlich relativ zu den Schienenwänden erstreckt; und
Lokalisieroberflächen zum Lokalisieren der Auskleidung (76) relativ zu der Statoranordnung (27).

2. Auskleidung nach Anspruch 1, wobei die Lokalisieroberflächen der Auskleidung Öffnungen (162, 162a) sind, welche die Auskleidung daran angepasst machen, Befestigungselemente aufzunehmen.

3. Auskleidung nach Anspruch 1 oder 2, wobei die zweite Schienenwand (104) eine Kontur hat, die in einem Bereich, der sich über die Hälfte der Distanz zwischen dem ersten Ende (152) und dem zweiten Ende (154) erstreckt, zylinderförmig mit einem konstanten Radius ist und vorzugsweise angepasst ist, mit dem rotationsfähigen Element (82) an mehr als einem Punkt in der zweiten Position zusammenzuwirken.

4. Auskleidung nach Anspruch 3, wobei die erste Schienenwand (102) zu der zweiten Schienenwand (104) mindestens in dem Bereich der zweiten Schienenwand, der den konstanten Radius hat, parallel verläuft.

5. Auskleidung nach einem der vorangehenden Ansprüche, wobei das Abstützelement eine Abschlusswand (106) aufweist, die lateral von der ersten Schienenwand (102) zu der zweiten Schienenwand (104) verläuft.

6. Auskleidung nach Anspruch 5, wobei das Abstützelement ferner eine Basis (112) aufweist, die mit der ersten Schienenwand (102), der zweiten Schienenwand (104) und der Abschlusswand (106) verbunden ist.

7. Auskleidung nach Anspruch 6, wobei die Basis (112) eine Öffnung (174) hat, die zwischen den Wänden (102, 104, 106) angeordnet ist.

8. Auskleidung nach Anspruch 7, wobei die Basis (112) eine Platte (157) aufweist, wobei die Platte (157) ferner einen ersten Flansch (158), der an einer Stelle mindestens einer Wand (104) benachbart sich seitlich erstreckt, wobei der erste Flansch (158) mindestens eine Öffnung (162a) hat, die die Platte daran anpasst, ein Befestigungselement aufzunehmen, wobei der erste Flansch (158) die Auskleidung daran anpasst, mit der umfangsmäßig verlaufenden Statorstruktur in der Rotationsmaschine zusammenzuwirken und die Auskleidung relativ zu dieser zu positionieren, wobei die Platte einen zweiten Flansch (166) aufweist, der sich von der Basis an einer einer der Seitenwände (102) benachbarten Stelle seitlich erstreckt; wobei der zweite Flansch (166) mindestens eine Öffnung (162) aufweist, welche die Basis daran anpasst, ein Befestigungselement aufzunehmen, wobei der zweite Flansch (166) die Auskleidung daran anpasst, mit der umfangsmäßig verlaufenden Statorstruktur in der Rotationsmaschine zusammenzuwirken und die Auskleidung relativ zu dieser zu lokalisieren.

9. Auskleidung nach Anspruch 8, wobei mindestens eine der Wände (102, 194) eine Kontur hat, die daran angepasst ist, eng mit der Kontur der Rollenanordnung in dem installierten Zustand an der zweiten Position konform zu sein, wobei die Kontur innerhalb eines Abstands von der Abschlusswand (106) ist, der geringer ist als der seitliche Abstand zwischen der ersten und der zweiten Schienenwand (102, 104), gemessen in einer Richtung rechtwinklig zu den Wänden über den zylinderförmigen Bereich; und wobei die Dicke eines jeden der Flansche (158, 166) größer ist als die Dicke der Basis.

10. Auskleidung nach Anspruch 1, wobei die erste Schienenwand (102) einen konstanten Radius über einen Bereich hat, der sich über die Hälfte der Strecke zwischen dem ersten Ende und dem zweiten Ende erstreckt;
wobei die zweite Schienenwand (104) parallel zur ersten Schienenwand verläuft und einen konstanten Radius über einen Bereich hat, der parallel zur ersten Schienenwand ist; und aufweisend
eine Abschlusswand (106), welche sich von der ersten Schienenwand (102) zu der zweiten Schienenwand (104) seitlich erstreckt;
eine Platte (157), welche sich relativ zu den Schienenwänden seitlich erstreckt, wobei die Platte hat
eine Basis (112) mit einer Dicke Tb, die mit der ersten Schienenwand (102), der zweiten Schienenwand (104) und der Abschlusswand (106) verbunden ist,
einen ersten Flansch (158), welcher sich von der Basis (112) mindestens einer Wand benachbart seitlich erstreckt, wobei der ersten Flansch (158) eine radiale Dicke Tfa und mindestens eine Öffnung hat, welche die Platte (157) daran anpasst, ein Befestigungselement aufzunehmen, wobei der erste Flansch (158) die Auskleidung daran anpasst, mit der umfangsmäßig verlaufenden Statorstruktur in der Rotationsmaschine zusammenzuwirken,
einen zweiten Flansch (166), welcher sich von der Basis (112) einer der Seitenwände benachbart seitlich erstreckt und einen zylinderförmigen Bereich hat, wobei der zweite Flansch (166) eine Dicke Tfb hat, wobei der zweite Flansch (166) mindestens eine Öffnung hat, welche die Platte (157) daran anpasst, das Befestigungselement aufzunehmen, wobei der zweite Flansch (166) die Auskleidung daran anpasst, mit der umfangsmäßigen Statorstruktur in der Rotationsmaschine zusammenzuwirken, und
ein Ende mit mindestens einer Öffnung (174), welche sich durch die Basis (112) erstreckt, welche die Kontinuität der Basis unterbricht;
wobei mindestens eine der Wände eine Kontur hat, die daran angepasst ist, eng mit der Kontur der Rollenanordnung im installierten Zustand konform zu sein, wobei die Kontur innerhalb eines Abstands von der Abschlusswand ist, der geringer ist als der seitliche Abstand zwischen der ersten und der zweiten Schienenwand, gemessen in einer Richtung rechtwinklig zu den Wänden über deren zylinderförmigen Bereich;
wobei die Basis und die Abschlusswand, welche die Schienenwände verbinden, die Schienenwände relativ zueinander während der Herstellung der Anordnung und unter Betriebsbedingungen positionieren und abstützen, und
wobei die Dicke eines jeden der Flansche Tfa, Tfb größer ist als die Dicke Tb der Basis, um die Steifigkeit der Auskleidung, verglichen mit Auskleidungen, die eine Dicke der Basis haben, gleich zur Dicke der Flansch ist, zu verringern.

11. Auskleidung nach Anspruch 1, wobei die Seitenwände gekrümmte Bogenwände (102, 104) sind, die parallel sind und ferner ein Verstärkungselement (106, 112) aufweisen, welches sich zwischen den Wänden erstreckt, um eine U-förmige Bahn zu bilden.

12. Statorstruktur für eine Gasturbinenmaschine, aufweisend eine Auskleidung (76) nach einem der vorangehenden Ansprüche, die in Bahnöffnungen (56) davon angebracht ist.

13. Gehäuseanordnung (40) für eine Gasturbinenmaschine, welche sich umfangsmäßig um eine Symmetrieachse erstreckt, wobei die Gehäuseanordnung ein Gehäuse (42) mit einer Mehrzahl von Passagen (30) für Arbeitsmediumsgase hat, die sich in einer generell radialen Richtung durch das Gehäuse (42) erstrecken, die umfangsmäßig eine von der anderen beabstandet sind und die eine Seite des Gehäuses (42) in Fluidverbindung mit der anderen Seite des Gehäuses bringen, wobei das Gehäuse (42) daran angepasst ist, mit einer benachbarten Ventilringanordnung (64) zu kooperieren, welche aufweist:
eine Mehrzahl von Flanschen (52), welche sich in einer generell axialen Richtung von dem Gehäuse und umfangsmäßig relativ zu der Achse des Gehäuses (42) erstrecken, wobei jeder Flansch umfangsmäßig von dem anderen beabstandet ist und eine Kante (53) hat, die umfangsmäßig verläuft, wobei jeder Flansch eine Bahnöffnung (56) hat, die axial und umfangsmäßig in jedem Flansch von der Kante (53) verläuft, welche den Flansch daran anpasst, eine Auskleidung (76) für die Bahnöffnung aufzunehmen und eine Rollenanordnung (58) mit einer Lageroberfläche (80) aufzunehmen,
wobei jede Öffnung von einer ersten Seite (142) und von einer zweiten Seite (144), die umfangsmäßig von der ersten Seite beabstandet ist, und durch eine dritte Seite (146), die sich umfangsmäßig zwischen der ersten Seite und der zweiten Seite erstreckt, begrenzt ist;
eine Auskleidung (76) nach einem der Ansprüche 1 bis 11, die in der ersten Bahnöffnung angeordnet ist und an dem Flansch angebracht ist,
wobei die Auskleidung aus einem Material mit einer Härte größer als der Härte des Gehäuses (42) gebildet ist und wobei die Auskleidung (76) eine Wärmeausdehnungsrate hat, die geringer ist als die Wärmeausdehnungsrate des Gehäuses (42);
wobei die Federratencharakteristik des Gehäuses (42) größer ist als die Federratencharakteristik der Auskleidung (76), so dass, obwohl die Kombination des Gehäuses (42) und der Auskleidungen (76) eine integrale Struktur bilden, die lokalen Flansche (52) sich mit dem Gehäuse zu der Position des Gehäuses bewegen und eine Wärmeausdehnung des Gehäuses (42) relativ zu der Auskleidung (76) erlauben und wobei sich die Auskleidung geringfügig verformt hinsichtlich der Wärmeausdehnung der Flansche, um eine derartige Ausdehnung aufzunehmen; und
wobei die Flansche (52) umfangsmäßig durch die Bahnöffnung (56), die sich axial von der ersten Kante (53) des Flansches erstreckt, unterbrochen sind, um die umfangsmäßige Kontinuität der lokalen Flansche zu unterbrechen.

14. Gehäuseanordnung (40) nach Anspruch 13, wobei sich die Mehrzahl von Befestigungselementen (98) zwischen dem Gehäuse (42) und der Auskleidung (76) erstreckt, um die Auskleidung an dem Gehäuse anzubringen.

15. Gehäuseanordnung (40) nach Anspruch 14, wobei die Befestigungselemente (98) Nieten sind und eine Federrate haben, die geringer ist als die Federrate des Gehäuses, um zusätzlich Wärmeausdehnung zwischen der Auskleidung und dem Gehäuse aufzunehmen.

16. Gehäuseanordnung (40) nach einem der Ansprüche 13 bis 15, wobei ein Elastomermaterial (96) zwischen der Auskleidung (76) und dem Gehäuse (40) angeordnet ist, um Schwingungen in der Auskleidung zu dämpfen.

17. Gehäuseanordnung (40) nach Anspruch 16, wobei jeder Flansch (52) eine äußere Oberfläche (54) und eine innere Oberfläche (55) hat und wobei sich die Bahnöffnung (56) radial durch den Flansch von der äußeren Oberfläche zu der inneren Oberfläche des Flansches mindestens über einen Teil der Bahnöffnung erstreckt, und wobei sich der Flansch axial und umfangsmäßig über einen Teil des Rests des Gehäuses erstreckt, so dass das Gehäuse einen Sims (108) an jeder Öffnung mit einer äußeren Oberfläche (109), welche in Richtung radial nach außen gerichtet ist, in enger Nähe zu der inneren Oberfläche der Auskleidung hat und wobei das Elastomermaterial (96) zwischen der Auskleidung (76) und dem Sims (108) angeordnet ist.

18. Gehäuseanordnung (40) nach Anspruch (17), wobei das Auskleidungselement eine Platte (157) mit einer Basis (112) aufweist, welche sich zwischen den Schienenwänden (102, 104) erstreckt, und wobei die Platte (157) eine innere Oberfläche hat, die sich über die äußere Oberfläche des Simses (109) erstreckt.

19. Gehäuseanordnung (40) nach einem der Ansprüche 13 bis 18, wobei sich eine Öffnung (174) radial durch die Platte (157) erstreckt, welche die Flexibilität der Auskleidung erhöht und eine Leitung für gefangenes Fluid schafft.

20. Gehäuseanordnung (40) nach einem der Ansprüche 13 bis 19, wobei die Auskleidung einen ersten Flansch (158), der sich seitlich von der einen der Wände (102, 104) erstreckt, wobei der erste Flansch eine äußere Oberfläche (64) hat, die mit der inneren Oberfläche (55) des Flansches (52) an dem Gehäuse zusammenwirkt, und einen zweiten Flansch hat, der sich seitlich von der anderen der Wände (102, 104) erstreckt, wobei der zweite Flansch eine äußere Oberfläche (172) hat, die mit der inneren Oberfläche (55) des Flansches (52) des Gehäuses zusammenwirkt.

21. Gehäuseanordnung (40) nach einem der Ansprüche 13 bis 20, wobei jede Bahnöffnung (56) durch eine erste Seite (142), durch eine zweite Seite (144), die umfangsmäßig von der ersten Seite beabstandet ist, und durch eine dritte Seite (146) begrenzt ist, die sich umfangsmäßig zwischen der ersten Seite (142) und der zweiten Seite (144) erstreckt; und
wobei mindestens eine der Wände (102, 104) der Auskleidung von mindestens einer Seite der Öffnung beabstandet ist und einen Spalt (D) dazwischen lässt, und wobei ein Elastomermaterial (96) zwischen der Seite der Bahnöffnung und der Schienenwand der Auskleidung in dem Spalt (D) angeordnet ist.

22. Gehäuseanordnung (40) nach einem der Ansprüche 13 bis 21, wobei die Auskleidung (76) aus Stahl gebildet ist und das Gehäuse aus einer Aluminiumlegierung gebildet ist, wobei die Auskleidung eine Härte hat, die größer ist als die Härte des Gehäuses, und eine Wärmeausdehnungsrate hat, die kleiner ist als die Wärmeausdehnungsrate des Gehäuses.

23. Gehäuseanordnung (40) nach einem der Ansprüche 13 bis 22, wobei jeder Flansch (52) eine äußere Oberfläche (54) und eine innere Oberfläche (55) hat und jeder Flansch (52) eine erste Bahnöffnung (56) und eine zweite Bahnöffnung (57) hat, wobei sich die Öffnungen radial durch den Flansch von der äußeren Oberfläche (54) der inneren Oberfläche (55) des Flansches mindestens über einen Teil der Bahnöffnung erstrecken und sich axial und umfangsmäßig über einen Teil des Rests des Gehäuses erstrecken, so dass das Gehäuse einen Sims (108) an jeder Öffnung hat mit einer äußeren Oberfläche, die in eine Richtung radial nach außen in enger Nähe zu der inneren Oberfläche (55) gerichtet ist und wobei die Auskleidung in der ersten Bahnöffnung radial durch den Sims (108) und den Flansch (52) gefangen ist.

24. Gehäuseanordnung (40), welche sich umfangsmäßig um eine Symmetrieachse erstreckt, wobei die Gehäuseanordnung (40) ein Gehäuse (42) mit einer Mehrzahl von Passagen (30) für Arbeitsmediumsgase hat, welche sich in einer generell radialen Richtung durch das Gehäuse (42) erstrecken, die eine von der anderen umfangsmäßig beabstandet sind und welche eine Seite des Gehäuses in Fluidverbindung mit der anderen Seite des Gehäuses verbringen, wobei das Gehäuse (42) daran angepasst ist, mit einer benachbarten Ventilringanordnung (64) mit Rollenanordnungen (158, 176) zusammenzuwirken, aufweisend:
eine Mehrzahl von Flanschen (52), welche sich axial von dem Gehäuse und umfangsmäßig relativ zu der Achse des Gehäuses erstrecken, wobei jeder Flansch umfangsmäßig von dem anderen beabstandet ist, wobei jeder Flansch eine äußere Oberfläche (54) und eine innere Oberfläche (55) hat und jeder Flansch eine erste Bahnöffnung (56) und eine zweite Bahnöffnung (57), die sich axial und umfangsmäßig in jeden Flansch erstrecken, hat, wobei jede von diesen den Flansch daran anpasst, eine Rollenanordnung (58) aufzunehmen, wobei die erste Bahnöffnung den Flansch daran anpasst, eine Rollenanordnung mit einer Lageroberfläche (80) und einer Auskleidung (76) für die Bahn aufzunehmen;
wobei jede der ersten Bahnöffnungen sich radial durch den Flansch von der äußeren Oberfläche zu der inneren Oberfläche des Flansches mindestens über einen Teil der Bahnöffnung erstreckt und sich axial und umfangsmäßig über einen Teil des Rests des Gehäuses erstreckt, so dass das Gehäuse einen Sims (108) an jeder Öffnung mit einer äußeren Oberfläche (109), die in der Richtung radial nach außen gerichtet ist, hat, wobei jede Öffnung durch eine erste Seite (142), durch eine zweite Seite (144), die umfangsmäßig von der ersten Seite (142) beabstandet ist, und durch eine dritte Seite (146) begrenzt ist, die sich umfangsmäßig zwischen der ersten Seite (142) und der zweiten Seite (144) erstreckt;
eine Auskleidung (76) nach Anspruch 1, die in der ersten Bahnöffnung angeordnet ist, wobei die Auskleidung die erste Schienenwand (102), die zweite Schienenwand (104) und eine Abschlusswand (106) hat, und wobei mindestens eine der Wände von mindestens einer Seite der Öffnung beabstandet ist und einen Spalt (D) dazwischen lässt, wobei die Auskleidung hat
eine Platte (157) mit einer Basis (112), welche sich zwischen den Schienenwänden (102, 104) erstreckt, wobei die Platte eine innere Oberfläche hat, die über die äußere Oberfläche (109) des Simses ragt, wobei die Platte aufweist
einen ersten Flansch (158), der sich umfangsmäßig von der Basis über die Wände erstreckt mit einer äußeren Oberfläche (164), die mit der inneren Oberfläche des Gehäuses zusammenwirkt,
einen zweiten Flansch (166), welcher sich seitlich von einer der anderen der Wände erstreckt und eine äußere Oberfläche (172) hat, die mit der inneren Oberfläche des Flansches des Gehäuses zusammenwirkt,
eine Ablassöffnung (174), welche sich radial durch die Platte erstreckt, die zum Teil durch den Sims (108) des Gehäuses blockiert ist; und
ein Elastomermaterial (96), welches zwischen der Seite der Bahnöffnung und einer Wand der Auskleidung in dem Spalt (D) angeordnet ist;
wobei das Elastomermaterial (96), welches zwischen der Auskleidung (76) und dem Gehäuse (42) angeordnet ist, Schwingungen in der Auskleidung dämpft;
wobei die Auskleidung (76) aus einem Material mit einer Härte, die größer ist als die Härte des Gehäuses (42), gebildet ist und wobei die Auskleidung eine Wärmeausdehnungsrate hat, die kleiner ist als die Wärmeausdehnungsrate des Gehäuses;
wobei die Federrate des Gehäuses (42) größer ist als die Federrate der Auskleidung (76), so dass, obwohl die Kombination des Gehäuses und der Auskleidungen eine integrale Struktur bildet, die lokalen Flansche (52) sich mit dem Gehäuses zu jeder Position des Gehäuses bewegen und eine Wärmeausdehnung des Gehäuses relativ zu der Auskleidung erlauben und wobei sich die Auskleidung hinsichtlich der Wärmeausdehnung der Flansche geringfügig verformt, um eine derartige Ausdehnung aufzunehmen;
wobei die Flansche (52) umfangsmäßig durch die Bahnöffnungen unterbrochen sind, die sich axial von der ersten Kante des Flansches erstrecken, welche die umfangsmäßige Kontinuität der lokalen Flansche unterbrechen; und
wobei die Mehrzahl von Nieten (98) die Auskleidung an dem Flansch anbringt und wobei die Nieten eine Federratencharakteristik haben, die geringer ist als die Federrate des Gehäuses, um zusätzlich Wärmeausdehnung zwischen der Auskleidung und dem Gehäuse und dem Flansch aufzunehmen.

25. Gehäuseanordnung (40) für eine Gasturbinenmaschine (10), aufweisend ein Gehäuse (42) mit einer Mehrzahl von Flanschen (52), wobei jeder eine Auskleidung (76) nach einem der Ansprüche 1 bis 11 zum Aufnehmen einer Rollenanordnung (58) hat, wobei die Auskleidung aus einem Material mit einer Härte gebildet ist, die größer ist als die des Gehäuses;
wobei die Auskleidung eine Wärmeausdehnungsrate hat, die kleiner ist als die des Gehäuses; und
wobei die Federratencharakteristik des Gehäuses größer ist als die der Auskleidung.

26. Statoranordnung (27) aufweisend eine Gehäuseanordnung (40) nach einem der Ansprüche 13 bis 25 und eine Rollenanordnung (58), die in der Bahnverkleidung (76) der Gehäuseanordnung (40) aufgenommen ist.

27. Statoranordnung nach Anspruch 26, wobei die Rollenanordnung (58) aufweist:
einen Stift (78), der um die Achse Ap angeordnet ist mit einem ersten Ende (116) und einem zweiten Ende (118), wobei der Stift in Richtung auf die Struktur, an der die Rollenanordnung unter Betriebszuständen befestigt ist, gedrückt wird, wobei der Stift (78) aufweist
einen Kopf (122) an dem ersten Ende (116), der mit dem rotationsfähigen Element (82) zusammenwirkt, wobei der Kopf (122) einen Druchmesser Dh hat, der sich umfangsmäßig um die Achse (Ap) erstreckt,
einen Schaft (128), der sich axial von dem Kopf (122) erstreckt, der um die Achse (Ap) angeordnet ist und einen Maximaldurchmesser (Ds) hat, der kleiner ist als der Durchmesser des Kopfes (122);
eine Klemmoberfläche (130) mit einem Bereich, der sich radial an eine Stelle erstreckt mit einem Durchmesser größer als dem Durchmesser (Ds) des Schafts (128);
einen Kragen (84) mit einem ersten Ende (132), welches dem Kopf des Stifts benachbart angeordnet ist, und einem zweiten Ende (134), welches den Kragen (84) daran anpasst, mit einer Abstützung (86) zusammenzuwirken,
wobei der Kragen (84) ferner aufweist
eine Radialoberfläche (136), welche sich in zusammenpassenden Kontakt mit der Klemmoberfläche (130) erstreckt,
eine innere axiale Oberfläche (139), wobei die innere axiale Oberfläche
ferner aufweist
einen ersten Bereich (140) dem Kopf (122) benachbart mit einem Bereich, der mit dem Schaft (128) mit einer kompressiven Kraft zusammenwirkt,
einen zweiten Bereich (141) mit einer Länge (Lr), wobei der zweite Bereich (141) radial nach außen von dem Schaft (128) und radial nach außen von einem Teil des ersten Bereichs (140) beabstandet ist, wobei der zweite Bereich (141) sich bei Betrieb von dem ersten Bereich (140) zu der Klemmoberfläche (86) erstreckt, um einen Spalt (G) zwischen dem Kragen (84) und dem Schaft (128) zu lassen, der sich von dem ersten Bereich (141) zu der Abstützung (86) erstreckt;
wobei bei Verwendung der Kragen (84) eine Reaktivkraft Fr auf den Stift (78) an dem ersten Bereich (140) ausübt, wobei das Beabstanden des Kragens von dem Schaft in dem zweiten Bereich (141) bewirkt, dass die Kraft Fr von der Abstützung (86) mindestens eine Strecke Lr beabstandet ist, die größer ist als die Strecke La zwischen der externen Kraft Fe und der reaktiven Kraft Fr, so dass die maximalen Biegespannungen in dem Schaft ein verringertes Niveau, verglichen mit Konstruktionen haben, bei denen die reaktive Kraft Fr gegen den Stift an der Abstützung (86) wirkt.

28. Statoranordnung (27) für eine Rotationsmaschine, die umfangsmäßig um eine Achse der Maschine angeordnet ist, wobei die Statoranordnung (27) eine Gehäuseanordnung (40) und einen Betätigungsring (64) aufweist, der axial und umfangsmäßig von einer ersten Position in eine zweite Position bewegbar ist, wenn sich der Ring axial in der Maschine relativ zu der Gehäuseanordnung verlagert, wobei die Statoranordnung eine Führungsanordnung zum Positionieren und Führen des Rings aufweist, wenn sich dieser zwischen der ersten und der zweiten Stelle bewegt, aufweisend:
ein umfangsmäßig verlaufendes Gehäuse (42) mit einer Mehrzahl von ersten Bahnöffnungen (56) und zweiten Bahnöffnungen (57), die sich umfangsmäßig und axial in der Maschine erstrecken, wobei die ersten Öffnungen (56) umfangsmäßig eine von der anderen beabstandet sind, und die daran an paßt sind, eine Auskleidung (76) aufzunehmen, wobei das Gehäuse eine Mehrzahl von umfangsmäßig beabstandeten lokalen Flanschen hat, wobei jeder Flansch eine erste Bahnöffnung (56) hat, welche die umfangsmäßige Kontinuität des Flansches unterbricht, die den Flansch daran angepasst macht, eine erste Rollenanordnung (58) mit einer Oberfläche (80) aufzunehmen, und wobei jeder von diesen eine zweite Bahnöffnung (57) hat, welche den Flansch daran anpasst, eine zweite Rollenanordnung (176) aufzunehmen, die eine Oberfläche hat, die elastischer ist als die Oberfläche der ersten Rollenanordnung (58);
eine Auskleidung (76) nach Anspruch 1, die an jedem Flansch (52) angebracht ist, die in jeder der Mehrzahl von ersten Bahnöffnungen (56) angeordnet ist, wobei die Auskleidung ein Paar von umfangsmäßig beabstandeten Schienenwänden (102, 104) hat, wobei jede Schienenwand einen Teil hat, der sich über mindestens die Hälfte der Länge der Wand erstreckt und zylinderförmig in seiner Gestalt ist, wobei die zweite Wand (104) umfangsmäßig von der ersten Wand (102) beabstandet ist und
einen Teil hat, der parallel zu der ersten Wand (104) ist;
eine Abschlusswand (106), welche sich zwischen der ersten Wand (102) und der zweiten Wand (104) erstreckt, um die Auskleidung zu begrenzen;
ein Elastomermaterial (96), welches zwischen den Wänden und der Auskleidung angeordnet ist;
eine Rollenanordnung (58) mit einem rotationsfähigen Element (82), welches an der Bahnöffnung (56) angeordnet ist, welches mit einer Schienenwand der Bahnöffnung zusammenwirkt, wenn sich die Rollenanordnung (58) sich axial relativ zu der Bahnöffnung bewegt, wobei die Rollenanordnung (58) einen Laufring (114) zum Aufnehmen des rotationsfähigen Elements (82) hat, wobei die Rollenanordnung einen Stift (78) mit einem Kopf (122), der einen Teil des Laufrings (114) für das rotationsfähige Element (82) der Rollenanordnung begrenzt, hat,
eine Klemmoberfläche (130), welche radial von einer Abstützung (86) beabstandet ist, wobei sich die Abstützung (86) von dem Ring (64) erstreckt, und
ein Kragen (84), der sich zwischen der Klemmoberfläche (130) und der Abstützung (86) erstreckt, der durch den Stift (78) in eine Klemmzusammenwirkung mit der Abstützung (86) gedrückt wird,
wobei der Kragen ein um den Stift (78) angeordnetes zylinderförmiges Inneres hat;
wobei das zylinderförmige Innere des Kragens (84) über einen Bereich (141), der sich von der Abstützung parallel zu dem Stift erstreckt, radial von dem Stift (78) nach außen beabstandet ist, wobei der Bereich ein zweiter Bereich ist und der Kragen einen ersten Bereich (140) hat, und wobei das zylinderförmige Innere des Kragens radial innerhalb von dem zweiten Bereich (141) über den ersten Bereich (140) angeordnet ist, der sich von dem ersten Bereich durch eine Position zwischen dem zweiten Bereich (141) und der Klemmoberfläche des Stifts (130) erstreckt;
wobei der Kragen (84) über dem zweiten Bereich (141) beabstandet ist, der sich von der Abstützung und nach außen von dem ersten Bereich (140) erstreckt, um Biegespannungen in dem Stift (78) zu verringern;
wobei das erste rotationsfähige Element (82) Kontakt an einem einzelnen Punkt hat, wenn sich das rotationsfähige Element von der ersten Position zu der zweiten Position bewegt und eine zylinderförmige Wand hat, die parallel zur zylinderförmigen Wand der Auskleidung in der geschlossenen Position ist, so dass das rotationsfähige Element mit der Wand entlang einer Kontaktlinie zusammenwirkt; und
wobei das elastische Material (180) des zweiten rotationsfähigen Elements (177) Schwingungen in der Auskleidung (76) und der Rollenanordnung (58) dämpft, wenn die Auskleidung und die Rollenanordnung relativ zueinander an einem Kontaktpunkt unter Betriebszuständen der Maschine schwingen, um durch Biegespannungen in dem Stift der Rollenanordnung induzierte Schwingung und Verschleiß an der Auskleidung zu verringern.

29. Verfahren zum Reparieren verschlissener Bahnoberflächen (142, 144) in Bahnöffnungen von einem Gasturbinenstatorgehäuse (42), aufweisend
Entfernen von verschlissenem Material von den Oberflächen (142, 144) der Bahnöffnung (56), und
Einsetzen einer Bahnauskleidung (76) nach einem der Ansprüche 1 bis 11 in die reparierte Bahnöffnung (56) des Gasturbinengehäuses (42).

30. Verfahren zum Modifizieren eines Rollenbahnöffnungsprofils in einer Gasturbinenmaschinen-Statorstruktur, aufweisend
Einsetzen einer Auskleidung (76) nach einem der Ansprüche 1 bis 11 mit dem gewünschten Bahnprofil in die Bahnöffnung (56).

## Revendications

1. Chemise (76) pour un ensemble formant stator (27) pour une machine rotative ayant des ouvertures de chemin de roulement (56) pour recevoir un ensemble formant rouleau (58) ayant un élément rotatif (82) qui se déplace entre deux positions dans des conditions opérationnelles ;
ladite chemise (76) pouvant être disposée de manière circonférentielle autour de l'axe de la machine dans une ouverture de chemin de roulement (56) et comprenant :
une première extrémité (152),
une seconde extrémité (154),
une ouverture (156) s'étendant depuis la première extrémité jusqu'à la seconde extrémité, qui est conçue pour recevoir l'élément rotatif,
une première paroi formant rail (102) s'étendant à partir de la première extrémité entre la première extrémité et la seconde extrémité ;
une seconde paroi formant rail (104) latéralement espacée de la première paroi formant rail ; ledit couple de parois formant rails limitant l'ouverture (156) pour guider l'élément rotatif de l'ensemble formant rouleau lorsque l'élément rotatif se déplace de la première position à la seconde position ;
ladite première extrémité (152) étant latéralement espacée de ladite seconde extrémité (154) ;
un élément de support (106, 157) s'étendant latéralement par rapport aux parois formant rails ; et
des surfaces de positionnement pour positionner la chemise (76) par rapport à l'ensemble formant stator (27).

2. Chemise selon la revendication 1, dans laquelle les surfaces de positionnement de la chemise sont des trous (162, 162a) qui permettent à la chemise de recevoir des dispositifs de fixation.

3. Chemise selon la revendication 1 ou 2, dans laquelle la seconde paroi formant rail (104) a un contour qui est cylindrique ayant un rayon constant dans une zone qui s'étend sur une moitié de la distance entre la première extrémité (152) et la seconde extrémité (154) et qui est de préférence conçue pour mettre en prise l'élément rotatif (82) au niveau de plus d'un point dans la seconde position.

4. Chemise selon la revendication 3, dans laquelle la première paroi formant rail (102) s'étend parallèlement à la seconde paroi formant rail (104) au moins dans la zone de la seconde paroi formant rail qui a un rayon constant.

5. Chemise selon l'une quelconque des revendications précédentes, dans laquelle l'élément de support comprend une paroi d'extrémité (106) s'étendant latéralement depuis la première paroi formant rail (102) jusqu'à la seconde paroi formant rail (104).

6. Chemise selon la revendication 5, dans laquelle l'élément de support comprend de plus une base (112) qui est reliée à la première paroi formant rail (102), à la seconde paroi formant rail (104) et à la paroi d'extrémité (106).

7. Chemise selon la revendication 6, dans laquelle la base (112) comporte une ouverture (174) disposée entre les parois (102, 104, 106).

8. Chemise selon la revendication 7, dans laquelle la base (112) comprend une plaque (157), la plaque (157) ayant de plus une première bride (158) s'étendant latéralement au niveau d'une position adjacente à au moins une paroi (104), la première bride (158) comportant au moins un trou (162a) qui permet à la plaque de recevoir un dispositif de fixation, la première bride (158) permettant à la chemise de mettre en prise et de positionner la chemise par rapport à la structure de stator s'étendant de manière circonférentielle dans la machine rotative ; dans laquelle la plaque comprend une seconde bride (166) s'étendant latéralement à partir de la base au niveau d'une position adjacente à l'une desdites parois (102), la seconde bride (166) comportant au moins un trou (162) qui permet à la base de recevoir un dispositif de fixation, la seconde bride (166) permettant à la chemise de mettre en prise et positionner la chemise par rapport à la structure de stator s'étendant de manière circonférentielle dans la machine rotative.

9. Chemise selon la revendication 8, dans laquelle au moins une desdites parois (102, 104) a un contour qui est conçu pour se conformer étroitement au contour de l'ensemble formant rouleau dans l'état installé à la seconde position, ledit contour étant à l'intérieur d'une distance de la paroi d'extrémité (106) qui est inférieure à la distance latérale entre les première et seconde parois formant rails (102, 104) mesurée dans une direction perpendiculaire aux parois sur la partie cylindrique ; et, dans laquelle l'épaisseur de chacune des brides (158, 166) est plus grande que l'épaisseur de la base.

10. Chemise selon la revendication 1, dans laquelle ladite première paroi formant rail (102) a un rayon constant pour une zone qui s'étend sur une moitié de la distance entre la première extrémité et la seconde extrémité ;
ladite seconde paroi formant rail (104) s'étend parallèlement à la première paroi formant rail et a un rayon constant dans une zone qui est parallèle à la première paroi formant rail ; et comprenant :
une paroi d'extrémité (106) s'étendant latéralement depuis la première paroi formant rail (102) jusqu'à la seconde paroi formant rail (104),
une plaque (157) s'étendant latéralement par rapport aux parois formant rails, la plaque ayant :
une base (112) ayant une épaisseur Tb, qui est reliée à la première paroi formant rail (102), à la seconde paroi formant rail (104) et à la paroi d'extrémité (106),
une première bride (158) s'étendant latéralement à partir de la base (112), adjacente à au moins une paroi, la première bride (158) ayant une épaisseur radiale Tfa et au moins un trou qui permet à la plaque (157) de recevoir un dispositif de fixation, la première bride (158) permettant à la chemise de mettre en prise la structure de stator s'étendant de manière circonférentielle dans la machine rotative,
une seconde bride (166) s'étendant latéralement à partir de la base (112), adjacente à l'une desdites parois ayant une partie cylindrique, la seconde bride (166) ayant une épaisseur Tfb, la seconde bride (166) comportant au moins un trou qui permet à la plaque (157) de recevoir le dispositif de fixation, la seconde bride (166) permettant à la chemise de mettre en prise de manière circonférentielle la structure de stator dans la machine rotative, et,
une extrémité avec au moins une ouverture (174) s'étendant à travers la base (112), ce qui interrompt la continuité de la base ;
dans laquelle au moins une desdites parois a un contour qui est conçu pour se conformer étroitement au contour de l'ensemble formant rouleau dans l'état installé, ledit contour étant à l'intérieur d'une distance de la paroi d'extrémité qui est inférieure à la distance latérale entre les première et seconde parois formant rails, mesurée dans une direction perpendiculaire aux parois sur leur partie cylindrique ;
dans laquelle la base et la paroi d'extrémité reliant les parois formant rails positionnent et supportent les parois formant rails l'une par rapport à l'autre pendant l'assemblage de fabrication et dans des conditions opérationnelles ; et,
dans laquelle l'épaisseur de chacune des brides Tfa, Tfb est plus grande que l'épaisseur Tb de la base pour diminuer la rigidité de la chemise en comparaison à des chemises ayant une épaisseur de la base qui est égale à l'épaisseur des brides.

11. Chemise selon la revendication 1, dans laquelle lesdites parois latérales sont des parois incurvées en arc (102, 104) qui sont parallèles, et comprenant de plus un élément de renfort (106, 112) s'étendant entre les parois pour former un chemin de roulement en forme de U.

12. Structure de stator pour un moteur de turbine à gaz comprenant une chemise (76), selon l'une quelconque des revendications précédentes, montée dans des ouvertures de chemin de roulement (56) de cette dernière.

13. Ensemble formant logement (40) pour un moteur de turbine à gaz, qui s'étend de manière circonférentielle autour d'un axe de symétrie, l'ensemble formant logement ayant un logement (42) muni d'une pluralité de passages (30) pour des gaz de milieu de travail s'étendant dans une direction globalement radiale à travers le logement (42) qui sont espacés les uns des autres de manière circonférentielle et qui mettent un côté du logement (42) en communication de fluide avec l'autre côté du logement, le logement (42) étant conçu pour coopérer avec un ensemble adjacent formant bague de soupape (64), qui comprend :
une pluralité de brides (52) s'étendant dans une direction globalement axiale à partir du logement et de manière circonférentielle par rapport à l'axe du logement (42), chaque bride étant espacée de manière circonférentielle de l'autre et ayant un bord (53) s'étendant de manière circonférentielle, chaque bride ayant une ouverture de chemin de roulement (56) s'étendant de façon axiale et de manière circonférentielle dans chaque bride à partir du bord (53), ce qui permet à la bride de recevoir une chemise (76) pour l'ouverture de chemin de roulement et de recevoir un ensemble formant rouleau (58) ayant une surface portante (80),
chaque ouverture étant limitée par un premier côté (142) et par un deuxième côté (144) espacé de manière circonférentielle du premier côté et par un troisième côté (146) qui s'étend de manière circonférentielle entre le premier côté et le deuxième côté ;
une chemise (76) selon l'une quelconque des revendications 1 à 11, disposée dans la première ouverture de chemin de roulement et fixée à la bride ;
dans lequel la chemise est formée d'une matière ayant une dureté plus grande que la dureté du logement (42), et dans lequel la chemise (76) a un coefficient de dilatation thermique qui est plus petit que le coefficient de dilatation thermique du logement (42) ;
dans lequel, la caractéristique de raideur du logement (42) est plus grande que la caractéristique de raideur de la chemise (76) de sorte que même si la combinaison du logement (42) et des chemises (76) forme une structure d'un seul tenant, les brides locales (52) se déplacent avec le logement jusqu'à l'emplacement du logement et permettent la dilatation thermique du logement (42) par rapport à la chemise (76), et la chemise dévie légèrement par rapport à la dilatation thermique des brides pour accepter une telle dilatation ; et
dans lequel les brides (52) sont interrompues de manière circonférentielle par l'ouverture de chemin de roulement (56) s'étendant de façon axiale à partir du premier bord (53) de la bride pour interrompre la continuité circonférentielle des brides locales.

14. Ensemble formant logement (40) selon la revendication 13, dans lequel une pluralité de dispositifs de fixation (98) s'étendent entre le logement (42) et la chemise (76) pour fixer la chemise au logement.

15. Ensemble formant logement (40) selon la revendication 14, dans lequel les dispositifs de fixation (98) sont des rivets et ont une raideur qui est inférieure à la raideur du logement pour accepter de plus une dilatation thermique entre la chemise et le logement.

16. Ensemble formant logement (40) selon l'une quelconque des revendications 13 à 15, dans lequel une matière élastomère (96) est disposée entre la chemise (76) et le logement (40) pour amortir les vibrations dans la chemise.

17. Ensemble formant logement (40) selon la revendication 16, dans lequel chaque bride (52) a une surface extérieure (54) et une surface intérieure (55), et l'ouverture de chemin de roulement (56) s'étend de façon radiale à travers la bride depuis la surface extérieure jusqu'à la surface intérieure de la bride au moins sur une partie de l'ouverture de chemin de roulement, et la bride s'étend de façon axiale et de manière circonférentielle sur une partie du restant du logement de sorte que le logement comporte un rebord (108) au niveau de chaque ouverture ayant une surface extérieure (109) qui fait face dans la direction radiale vers l'extérieur tout près de la surface intérieure de la chemise, et dans lequel la matière élastomère (96) est disposée entre la chemise (76) et le rebord (108).

18. Ensemble formant logement (40) selon la revendication 17, dans lequel l'élément formant chemise comprend une plaque (157) ayant une base (112) qui s'étend entre les parois formant rails (102, 104), et la plaque (157) a une surface intérieure qui s'étend sur la surface extérieure (109) du rebord.

19. Ensemble formant logement (40) selon l'une quelconque des revendications 13 à 18, dans lequel un trou (174) s'étend de façon radiale à travers la plaque (157), ce qui augmente la souplesse de la chemise et définit un conduit pour le liquide pris au piège.

20. Ensemble formant logement (40) selon l'une quelconque des revendications 13 à 19, dans lequel la chemise a une première bride (158) s'étendant latéralement à partir de l'une des parois (102, 104), la première bride ayant une surface extérieure (164) qui met en prise la surface intérieure (55) de la bride (52) sur le logement, et une seconde bride (166) s'étendant latéralement à partir de l'autre desdites parois (102, 104), la seconde bride ayant une surface extérieure (172) qui met en prise la surface intérieure (55) de la bride (52) du logement.

21. Ensemble formant logement (40) selon l'une quelconque des revendications 13 à 20, dans lequel chaque ouverture de chemin de roulement (56) est limitée par un premier côté (142), par un deuxième côté (144) espacé de manière circonférentielle du premier côté et par un troisième côté (146) qui s'étend de manière circonférentielle entre le premier côté (142) et le deuxième côté (144) ; et
dans lequel au moins une des parois (102, 104) de la chemise est espacée d'au moins un côté de l'ouverture, laissant un espacement (D) entre ces dernières, et
dans lequel une matière élastomère (96) est disposée entre le côté de l'ouverture de chemin de roulement et la paroi formant rail de la chemise dans l'espacement (D).

22. Ensemble formant logement (40) selon l'une quelconque des revendications 13 à 21, dans lequel la chemise (76) est formée d'acier et le logement (42) est formé d'un alliage d'aluminium, la chemise ayant une dureté supérieure à la dureté du logement et un coefficient de dilatation thermique qui est plus petit que le coefficient de dilatation thermique du logement.

23. Ensemble formant logement (40) selon l'une quelconque des revendications 13 à 22, dans lequel chaque bride (52) a une surface extérieure (54) et une surface intérieure (55), et chaque bride (52) a une première ouverture de chemin de roulement (56) et une seconde ouverture de chemin de roulement (57), les ouvertures s'étendant de façon radiale à travers la bride depuis la surface extérieure (54) jusqu'à la surface intérieure (55) de la bride au moins sur une partie de l'ouverture de chemin de roulement, et s'étendant de façon axiale et de manière circonférentielle sur une partie du restant du logement de sorte que le logement a un rebord (108) au niveau de chaque ouverture ayant une surface extérieure qui fait face dans la direction radiale vers l'extérieur tout près de la surface intérieure (55), et dans lequel la chemise disposée dans ladite première ouverture de chemin de roulement est prise au piège de façon radiale par le rebord (108) et la bride (52).

24. Ensemble formant logement (40) qui s'étend de manière circonférentielle autour d'un axe de symétrie, l'ensemble formant logement (40) ayant un logement (42) ayant une pluralité de passages (30) pour des gaz de milieu de travail s'étendant dans une direction globalement radiale à travers le logement (42) qui sont espacés les uns des autres de manière circonférentielle et qui mettent un côté du logement en communication de fluide avec l'autre côté du logement, le logement (42) étant conçu pour coopérer avec un ensemble adjacent formant bague de soupape (64) ayant des ensembles formant rouleaux (158, 176), qui comprend :
une pluralité de brides (52) s'étendant de façon axiale à partir du logement et de manière circonférentielle par rapport à l'axe du logement, chaque bride étant espacée de manière circonférentielle de l'autre, chaque bride ayant une surface extérieure (54) et une surface intérieure (55), et chaque bride ayant une première ouverture de chemin de roulement (56) et une seconde ouverture de chemin de roulement (57) s'étendant de façon axiale et de manière circonférentielle dans chaque bride, chacune d'elles permettant à la bride de recevoir un ensemble formant rouleau (58), la première ouverture de chemin de roulement permettant à la bride de recevoir un ensemble formant rouleau ayant une surface portante (80) et une chemise (76) pour le chemin de roulement ;
chacune desdites premières ouvertures de chemin de roulement s'étendant de façon radiale à travers la bride depuis la surface extérieure jusqu'à la surface intérieure de la bride au moins sur une partie de l'ouverture de chemin de roulement, et s'étendant de façon axiale et de manière circonférentielle sur une partie du restant du logement de sorte que le logement a un rebord (108) au niveau de chaque ouverture ayant une surface extérieure (109) qui fait face dans la direction radiale vers l'extérieur, chaque ouverture étant limitée par un premier côté (142), par un deuxième côté (144) espacé de manière circonférentielle du premier côté (142) et par un troisième côté (146) qui s'étend de manière circonférentielle entre le premier côté (142) et le deuxième côté (144) ;
une chemise (76) selon la revendication 1, disposée dans la première ouverture de chemin de roulement, ladite chemise ayant ladite paroi formant rail (102), ladite seconde paroi formant rail (104) et une paroi d'extrémité (106), et au moins une des parois étant espacée d'au moins un côté de l'ouverture, laissant un espacement (D) entre ces dernières, la chemise ayant :
une plaque (157) ayant une base (112) s'étendant entre les parois formant rails (102, 104), la plaque ayant une surface intérieure qui s'étend sur la surface extérieure (109) du rebord, la plaque comprenant :
une première bride (158) s'étendant de manière circonférentielle à partir de la base au-delà des parois ayant une surface extérieure (164) qui met en prise la surface intérieure du logement,
une seconde bride (166) s'étendant latéralement à partir d'une des autres desdites parois ayant une surface extérieure (172) qui met en prise la surface intérieure de la bride du logement,
un trou d'écoulement (174) s'étendant de façon radiale à travers la plaque, qui est partiellement bloqué par le rebord (108) du logement ; et
une matière élastomère (96) disposée entre le côté de l'ouverture de chemin de roulement et une paroi de la chemise dans l'espacement (D) ;
dans lequel la matière élastomère (96) disposée entre la chemise (76) et le logement (42) amortit les vibrations dans la chemise ;
dans lequel la chemise (76) est formée d'une matière ayant une dureté supérieure à la dureté du logement (42), et dans lequel la chemise a un coefficient de dilatation thermique qui est inférieur au coefficient de dilatation thermique du logement ;
dans lequel la raideur du logement (42) est supérieure à la raideur de la chemise (76) de sorte que même si la combinaison du logement et des chemises forme une structure d'un seul tenant, les brides locales (52) se déplacent avec le logement vers chaque emplacement du logement, permettant la dilatation thermique du logement par rapport à la chemise, et dans lequel la chemise dévie légèrement par rapport à la dilatation thermique des brides pour accepter une telle dilatation ;
dans lequel les brides (52) sont interrompues de manière circonférentielle par les ouvertures de chemin de roulement s'étendant de façon axiale à partir du premier bord de la bride qui interrompent la continuité circonférentielle des brides locales ; et
dans lequel une pluralité de rivets (98) fixent la chemise à la bride et dans lequel les rivets ont une caractéristique de raideur qui est inférieure à la raideur du logement pour accepter de plus la dilatation thermique entre la chemise et le logement et la bride.

25. Ensemble formant logement (40) pour moteur de turbine à gaz (10), comprenant un logement (42) ayant une pluralité de brides (52), chacune ayant une chemise (76) selon l'une quelconque des revendications 1 à 11, pour recevoir un ensemble formant rouleau (58), ladite chemise étant formée d'une matière ayant une dureté supérieure à celle du logement ;
ladite chemise ayant un coefficient de dilatation thermique qui est plus petit que celui du logement ; et
la caractéristique de raideur du logement est supérieure à celle de la chemise.

26. Ensemble formant stator (27) comprenant un ensemble formant logement (40) selon l'une quelconque des revendications 13 à 25 et un ensemble formant rouleau (58) reçu dans la chemise de chemin de roulement (76) de l'ensemble formant logement (40).

27. Ensemble formant stator selon la revendication 26, dans lequel ledit ensemble formant rouleau (58) comprend :
une broche (78) disposée autour de l'axe Ap ayant une première extrémité (116) et une seconde extrémité (118), la broche étant pressée vers la structure à laquelle l'ensemble formant rouleau est fixé dans des conditions opérationnelles, la broche (78) comprenant :
une tête (122) au niveau de la première extrémité (116) qui met en prise l'élément rotatif (82), la tête (122) ayant un diamètre Dh qui s'étend de manière circonférentielle autour de l'axe (Ap),
une tige (128) s'étendant de façon axiale à partir de la tête (122), qui est disposée autour de l'axe (Ap) et qui a un diamètre maximal (Ds) qui est plus petit que le diamètre de la tête (122),
une surface de serrage (130) ayant une partie qui s'étend de façon radiale au niveau d'un emplacement ayant un diamètre plus grand que le diamètre (Ds) de la tige (128) ;
une collerette (84) ayant une première extrémité (132) disposée à côté de la tête de la broche et une seconde extrémité (134) qui permet à la collerette (84) de mettre en prise un support (86), la collerette (84) comprenant de plus :
une surface radiale (136) s'étendant en contact superficiel avec la surface de serrage (130),
une surface axiale interne (139), la surface axiale interne comprenant de plus :
une première zone (140) adjacente à la tête (122) ayant une partie qui met en prise la tige (128) avec une force compressive,
une seconde zone (141) ayant une longueur (Lr), la seconde zone (141) étant espacée de façon radiale vers l'extérieur de la tige (128) et de façon radiale vers l'extérieur d'une partie de la première zone (140), la seconde zone (141) s'étendant, en fonctionnement, depuis la première zone (140) jusqu'à la surface de serrage (86) pour laisser un espacement (G) entre la collerette (84) et la tige (128) qui s'étend depuis la première zone (141) jusqu'au support (86) ;
dans lequel en fonctionnement, la collerette (84) exerce une force réactive Fr sur la broche (78) au niveau de la première zone (140), l'espacement entre la collerette et la tige dans la seconde zone (141) amenant la force Fr à être espacée du support (86) d'au moins une distance Lr qui est supérieure à la distance La entre la force externe Fe et la force réactive Fr de sorte que les contraintes de flexion maximales dans la tige ont un niveau diminué en comparaison aux structures dans lesquelles la force réactive Fr contre la broche agit au niveau du support (86).

28. Ensemble formant stator (27) pour machine rotative, disposé de manière circonférentielle autour d'un axe de la machine, l'ensemble formant stator (27) comprenant un ensemble formant logement (40) et une bague de mise en oeuvre (64) qui est mobile de façon axiale et de manière circonférentielle d'une première position à une seconde position lorsque la bague se déplace axialement dans la machine par rapport à l'ensemble formant logement, l'ensemble formant stator comprenant un ensemble de guidage pour positionner et guider la bague lorsqu'elle se déplace entre les premier et second emplacements, qui comprend :
un logement s'étendant de manière circonférentielle (42) ayant une pluralité de premières ouvertures de chemin de roulement (56) et de secondes ouvertures de chemin de roulement (57) s'étendant de manière circonférentielle et de façon axiale dans la machine, les premières ouvertures (56) étant espacées de manière circonférentielle les unes des autres, et qui sont conçues pour recevoir une chemise (76), le logement ayant une pluralité de brides locales espacées de manière circonférentielle (52), chaque bride ayant une première ouverture de chemin de roulement (56) qui interrompt la continuité circonférentielle de la bride, ce qui permet à la bride de recevoir un premier ensemble formant rouleau (58) ayant une surface (80) et chacun ayant une seconde ouverture de chemin de roulement (57) qui permet à la bride de recevoir un second ensemble formant rouleau (176) qui a une surface qui est plus élastique que la surface du premier ensemble formant rouleau (58) ;
une chemise (76) selon la revendication 1, fixée à chaque bride (52) qui est disposée dans chaque ouverture de la pluralité de premières ouvertures de chemin de roulement (56), la chemise ayant un couple de parois formant rails espacées de manière circonférentielle (102, 104), chaque paroi formant rail ayant une partie qui s'étend au moins sur la moitié de la longueur de la paroi et qui est de forme cylindrique, la seconde paroi (104) étant espacée de manière circonférentielle de la première paroi (102) et ayant une partie qui est parallèle à la première paroi (104) ;
une paroi d'extrémité (106) s'étendant entre la première paroi (102) et la seconde paroi (104) pour limiter la chemise ;
une matière élastomère (96) disposée entre les parois et la chemise ;
un ensemble formant rouleau (58) ayant un élément rotatif (82) disposé dans l'ouverture de chemin de roulement (56) qui met en prise une paroi formant rail de l'ouverture de chemin de roulement lorsque l'ensemble formant rouleau (58) se déplace de façon axiale par rapport à l'ouverture de chemin de roulement, l'ensemble formant rouleau (58) ayant un chemin de roulement (114) pour recevoir l'élément rotatif (82), l'ensemble formant rouleau ayant une broche (78) ayant une tête (122) qui limite une partie du chemin de roulement (114) pour l'élément rotatif (82) de l'ensemble formant rouleau ;
une surface de serrage (130) espacée de façon radiale d'un support (86), le support (86) s'étendant à partir de la bague (64), et
une collerette (84) s'étendant entre la surface de serrage (130) et le support (86) qui est pressée par la broche (78) dans une mise en prise de serrage avec le support (86), la collerette ayant une surface intérieure cylindrique disposée autour de la broche (78) ;
dans lequel la surface intérieure cylindrique de la collerette (84) est espacée de façon radiale vers l'extérieur de la broche (78) sur une zone (141) qui s'étend à partir du support et parallèlement à la broche, dans lequel ladite zone est une seconde zone et la collerette a une première zone (140), et dans lequel la surface intérieure cylindrique de la collerette est disposée de façon radiale vers l'intérieur de la seconde zone (141) sur la première zone (140) qui s'étend depuis la première zone jusqu'à un emplacement entre la seconde zone (141) et la surface de serrage de la broche (130) ;
dans lequel la collerette (84) est espacée sur la seconde zone (141) qui s'étend à partir du support et vers l'extérieur de la première zone (140) pour réduire les contraintes de flexion dans la broche (78) ;
dans lequel le premier élément rotatif (82) est en contact au niveau d'un point unique lorsque l'élément rotatif se déplace de la première position à la seconde position et a une paroi cylindrique qui est parallèle à la paroi cylindrique de la chemise dans la position fermée de sorte que l'élément rotatif met en prise la paroi le long d'une ligne de contact ; et
dans lequel la matière élastique (180) du second élément rotatif (177) amortit les vibrations dans la chemise (76) et l'ensemble formant rouleau (58) lorsque la chemise et l'ensemble formant rouleau vibrent l'un par rapport à l'autre au niveau d'un contact ponctuel sous des conditions opérationnelles du moteur pour réduire les contraintes de flexion induites par les vibrations dans la broche de l'ensemble formant rouleau et pour réduire l'usure de la chemise.

29. Procédé de réparation de surfaces de chemin de roulement usées (142, 144) dans des ouvertures de chemin de roulement (56) d'un logement de stator de turbine à gaz (42), comprenant :
l'enlèvement de la matière usée depuis les surfaces (142, 144) de l'ouverture de chemin de roulement (56), et
l'insertion d'une chemise de chemin de roulement (76) selon l'une quelconque des revendications 1 à 11 dans l'ouverture de chemin de roulement réparée (56) du logement de turbine à gaz (42).

30. Procédé de modification d'un profil d'ouverture de chemin de roulement de rouleau dans une structure de stator de moteur de turbine à gaz, comprenant :
l'insertion d'une chemise (76) selon l'une quelconque des revendications 1 à 11 ayant le profil de chemin de roulement souhaité dans l'ouverture de chemin de roulement (56).
